# EUROPEAN PATENT APPLICATION

(11) **EP 4 700 933 A1**
(43) Date of publication of application: **25.02.2026**
(21) Application number: 25195462.4
(22) Date of filing: 12.08.2025
(51) Int. Cl.: H01M 50/184, H01M 50/186, H01M 50/552, H01M 50/567

(54) **SECONDARY BATTERY**

(30) Priority: 19.08.2024 KR 20240110751; 11.09.2024 KR 20240123755; 02.04.2025 KR 20250043060; 02.04.2025 KR 20250043061; 11.08.2025 KR 20250110932; 11.08.2025 KR 20250110951
(71) Applicant: LG Energy Solution, Ltd., Seoul 07335 (KR)
(72) Inventor: LEE, Hyun Hee, Daejeon 34122 (KR)
(74) Representative: Goddar, Heinz J.

(57) **Abstract**

Disclosed herein is a secondary battery (1000) comprising a case (1100) in which an opening is formed, an electrode assembly (1200) comprising an electrode portion accommodated in the case and a plurality of electrode tabs formed at one side of the electrode portion, a current collection member (1300) electrically connected to the plurality of electrode tabs and comprising a current collection protrusion (1320) that protrudes from the current collection member, and a cap assembly (1400) covering the opening of the case. The cap assembly comprises a cap (1410) in which a through hole (1411) is formed, an electrode terminal (1420) in which an insertion hole (1421) is formed, the electrode terminal being arranged so that the through hole and the insertion hole overlap each other, and a fastening member (1440). The fastening member comprises a hollow body portion (1441) into which the current collection protrusion is inserted and that extends from a first end through the insertion hole in the electrode terminal and then through the through hole in the cap to a second end, a first projecting portion (1442) projecting laterally outward from the body portion at the first end of the body portion, and a second projecting portion (1443) projecting laterally outward from the body portion at the second end of the body portion.

## Description

### CROSS-REFERENCE TO RELATED APPLICATIONS

This application is based on and claims priority from Korean Patent Application Nos. 10-2024-0110751 filed on August 19, 2024, 10-2024-0123755 filed on September 11, 2024, and 10-2025-0043060 filed on April 02, 2025, with the Korean Intellectual Property Office, the disclosures of which are incorporated herein in their entireties by reference.

### TECHNICAL FIELD

The present disclosure relates to a secondary battery, and more particularly, to a secondary battery in which a fastening member such as a rivet part is inserted into a hole that penetrates a cap and an electrode terminal to assemble a cap assembly.

### BACKGROUND

Recently, as the demand for portable electronic products has surged and the development of electric vehicles, storage batteries for energy storage, robots, and satellites is accelerated, a high-performance secondary battery capable of repeated charging and discharging is actively researched.

Secondary batteries may be classified depending on a shape of the battery case into a can type secondary battery in which an electrode assembly may be embedded in a rigid housing (e.g., a metal can) and a pouch type secondary battery in which an electrode assembly may be embedded in a pouch formed of a sheet (e.g., an aluminum laminate sheet). The can type secondary batteries may be classified into a cylindrical secondary battery and a prismatic secondary battery depending on a shape of the housing (e.g., the metal can).

### SUMMARY

In the can type secondary battery, the electrode assembly may be accommodated in a case made of a rigid material, in particular a metal material, and a cap assembly may be combined with the opening of the case. In this case, if sealing between components forming the cap assembly is weakened, a problem, such as the leakage of an electrolyte, may occur. In particular, sealing between a cap (e.g., a cap plate) and an electrode terminal combined therewith is important, for example along a through hole of the cap. If the sealing of the cap assembly is increased in order to solve such a problem, strengthening the sealing of the cap assembly may lead to the use of various sealing components, which complicates the assembly process.

Accordingly, there is a need to develop a cap assembly of a secondary battery that can be assembled simply while preventing the leakage of an electrolyte.

Various embodiments are directed to providing a secondary battery including a cap assembly which may prevent the leakage of an electrolyte and may be simply assembled. Further embodiments are directed to providing a cap assembly for use in a secondary battery and a battery part (e.g., for use in a secondary battery) including a cap assembly which may prevent the leakage of an electrolyte and may be simply assembled.

Various embodiments may be directed to enhancing sealing performance in an area near a fastening member (e.g., a rivet part).

Various embodiments may be directed to reducing the thickness of an area near the fastening member/rivet part.

Various embodiments may be directed to increasing an adhesion force with a gasket part and other parts.

In the following, a secondary battery and a cap assembly according to a first aspect of the present disclosure are described.

In an embodiment according to the first aspect of the present disclosure, a secondary battery may include a case, an electrode assembly, a current collection member, and a cap assembly. An opening is formed in the case. The electrode assembly includes an electrode portion (which may also be referred to as an electrode part) accommodated in the case and a plurality of electrode tabs (e.g., foil tabs) formed at one side (e.g., one end) of the electrode portion. The current collection member (e.g., a current collection plate thereof) is electrically connected to the electrode tabs and includes a current collection protrusion that protrudes from the current collection member. The cap assembly covers (e.g., is combined with) the opening of the case. The cap assembly includes a cap (e.g., a cap plate), an electrode terminal, and a fastening member (e.g., a rivet part). A hole (which is referred to as a through hole) is formed in (e.g., through) the cap (e.g., the cap plate). A hole (which is referred to as an insertion hole) is formed in (e.g., through) the electrode terminal. The electrode terminal is arranged (for example over the cap) so that the through hole and the insertion hole overlap each other (e.g., correspond to each other). The fastening member (e.g., the rivet part) includes a body portion (which may also be referred to as body part), a first projecting portion (e.g., a first bent part), and a second projecting portion (e.g., a second bent part). The body portion is hollow (e.g., is or has a hollow structure). The current collection protrusion is inserted into the body portion (e.g., into the hollow structure). The body portion extends from a first end through the insertion hole in the electrode terminal and then through the through hole in the cap to a second end. The first projecting portion (e.g., the first bent part) projects laterally outward from the body portion at the first end of the body portion (e.g., by being bent toward the electrode terminal on one side of the body portion). The second projecting portion (e.g., the second bent part) projects laterally outward from the body portion at the second end of the body portion (e.g., is bent toward the base insulating member on the other side of the body part).

The secondary battery is configured to be charged and discharged. The secondary battery may be a can type secondary battery, in particular a prismatic secondary battery.

The case of the battery (also referred to as the battery case herein) may be made of (e.g., comprise or consist of) a rigid material, in particular a metal material. The case may have a prismatic shape (i.e., have, at least substantially, the shape of a prism), in particular a quadrilateral (quadrangular) prismatic (e.g., parallelepiped) shape such as a rectangular prismatic shape (i.e., have, at least substantially, the shape of a rectangular cuboid). The case has an opening, e.g., for inserting the electrode assembly into the case. The opening may be formed at least one side (e.g., surface) of the case. In some examples, the opening may extend over the entire side (e.g., the entire top or top surface) of the case.

As used herein, directions, orientations and similar geometric terms may be defined relative to the case of the secondary battery, in particular relative to the opening therein and/or the cap covering the opening.

For example, a side or surface of the case in which the opening is formed and/or where the cap assembly is arranged may be referred to as an upper or top side and surface, respectively. A side or surface of the case opposite to the side or surface in which the opening is formed and/or where the cap assembly is arranged may be referred to as a lower or bottom side and surface, respectively. Similarly, a side or surface of an element, structure or the like facing in the same (or substantially the same) direction as the upper side or surface of the case may be referred to as an upper (or top) side and surface, respectively, of the respective element/structure and a side or surface of an element, structure or the like facing in the same (or substantially the same) direction as the bottom side or surface of the case may be referred to as a bottom (or lower) side and surface, respectively, of the respective element/structure. A direction from the lower side or surface of the case to the upper side or surface of the case may be referred to as a vertical direction or vertically and a direction perpendicular to the vertical direction (e.g., parallel to the upper side or surface) may be referred to as a horizontal direction or horizontally. It is, however, to be noted that these terms are not intended to imply any particular orientation or direction with respect to the direction of gravity or other entities (such as a device that the secondary battery is used in) as this may dependent on the orientation of the secondary battery (and/or the device) in space, which may vary depending on use and state of the battery.

Additionally or alternatively, a side or surface of an element, structure or the like facing towards an inside of the battery case may for example be referred to as an inner side and surface, respectively, of the respective element/structure and a side or surface of an element, structure or the like facing towards an outside of the battery case may be referred to as an outer side and surface, respectively, of the respective element. A direction towards an inside of the battery case may be referred to as an inward direction or inwards and a direction towards an outside of the battery case may be referred to as an outward direction or outwards.

The electrode assembly may be a stacked or wound electrode assembly, wherein the electrode portion may, e.g., be formed by stacking and winding, respectively, one or more electrode members (e.g., electrode sheets or plates). The electrode assembly is not particularly limited and may be embodied as is known in the art.

The electrode tabs may be formed at the side of the electrode portion facing the opening of the case (i.e., at or on the upper side of the electrode portion). The electrode tabs may protrude from the electrode portion, e.g., in the direction of the opening. Each electrode tab may be electrically connected to (e.g., integrally formed with and/or attached to) one of the electrode members, e.g., to a respective one of the electrode members. In some examples, the electrode tabs may be embodied as foil tabs.

Some or all of the electrode tabs may be integrally formed with the electrode portion (e.g., with the electrode members and in particular with a respective one of the electrode members). Additionally or alternatively, some or all of the electrode tabs may each be provided as (or may comprise) a (respective) separate tab member that is separate from the electrode portion and/or the electrode members. Such electrode tabs (e.g., the separate tab members) may for example be attached to (e.g., welded) to the electrode portion (e.g., to the electrode members and in particular to a respective one of the electrode members).

The current collection member may be configured to pass current (e.g., provide a conductive path) from the electrode assembly (e.g., the electrode tabs) to the electrode terminal of the secondary battery (which may be an external terminal of the secondary battery for connecting to the secondary battery from the outside). The current collection member may be configured to collect the current from the plurality of electrode tabs (e.g., pass current from each of the electrode tabs to the electrode terminal).

The current collection member may be in direct contact with the plurality of electrode tabs (e.g., with no other elements arranged therebetween, for example with the electrode tabs being welded directly to the current collection member). The current collection member (e.g., the current collection protrusion) may be electrically connected to the electrode terminal via the fastening member (e.g., be in direct contact with the fastening member, which in turn may be in direct contact with the electrode terminal).

The current collection member may optionally include a current collection base (e.g., a current collection plate) electrically connected to the electrode tabs (e.g., welded thereto). The current collection protrusion may protrude from the current collection base (e.g., the current collection plate, in particular a rectangular current collection plate), e.g., in the direction away from the electrode assembly (towards the opening).

The current collection member may be formed as a single piece or as a multi-piece assembly. The current collection protrusion may be integrally formed with the current collection member (e.g., the current collection base).

The cap assembly may be combined with the opening of the case so as to cover (e.g., close and, optionally, seal) the opening. The cap of the cap assembly may comprise or be embodied as a cap plate (e.g., a polygonal and in particular quadrilateral cap plate such as a rectangular cap plate). The cap may cover the opening at least in part, in some examples the entire opening (e.g., seal the opening).

The electrode terminal may serve to electrically contact the electrode assembly from the outside of the secondary battery. The electrode terminal may be arranged over the cap on the outside of the battery (e.g., so as to face away from the electrode assembly). The electrode terminal may comprise or be embodied as a terminal plate, for example a polygonal (e.g., rectangular) or elliptical (e.g., circular) terminal plate.

The electrode terminal is arranged over (e.g., on or above) the cap so that the through hole and the insertion hole overlap at least partially, in some examples entirely (e.g., such that the through hole overlaps the entire insertion hole and/or vice-versa). The through hole (e.g., a center and/or an edge thereof) may be aligned with the insertion hole (e.g., a center and an edge, respectively, thereof). The through hole and the insertion hole may have the same shape (e.g., elliptical, circular, polygonal or rectangular). The through hole and the insertion hole may have the same size (e.g., a same diameter or width) or may have a different size (e.g., a different diameter or width).

Optionally, the cap assembly may include a base insulating member. The base insulating member may be disposed between the cap (e.g., the cap plate) and the electrode assembly. The base insulating member may electrically insulate the cap from the electrode assembly or a part thereof (e.g., the electrode tabs), the fastening member and/or the current collection member.

The fastening member may fasten (e.g., hold together or attach) the cap (e.g., the cap plate) and the electrode terminal to each other. The fastening member may comprise or be embodied as a rivet (e.g., as detailed below), in which case the fastening member (or rivet) may also be referred to as a rivet part.

The fastening member includes a hollow body portion (e.g., a hollow shaft such as a hollow cylinder or a hollow polygonal post), in which the current collection protrusion (e.g., a part thereof) is arranged. The current collection protrusion may be configured to be press-fitted into body portion (e.g., to form a press-fit with the body portion/fastening member). For this, the size (e.g., radius or width) of the current collection protrusion may for example be the same as or slightly greater than the size of the opening/hollow in the body part.

The hollow body portion extends, for example along the vertical direction, from a first end (which is closer to, e.g., adjacent to, the electrode terminal and may also be referred to as the outer or terminal-side end) to a second end (which is closer to, e.g., adjacent to, the cap and/or the electrode assembly and may also be referred to as the inner or cap-side end).

A direction from the first end to the second end of the hollow body portion (e.g., along an axis of the hollow body portion) may be referred to as a longitudinal direction of the body portion (or fastening member). This longitudinal direction may for example be parallel or substantially parallel to the vertical direction and/or perpendicular or substantially perpendicular to one or both of the electrode terminal and the cap. A direction at an angle (i.e., not parallel) to the longitudinal direction may be referred to as a lateral direction of the body portion (or fastening member) and, in the case of 90° angle, as a radial direction of the body portion (or fastening member). Said radial direction may be horizontal (in the reference frame of the battery case as defined above). As used herein, expressions such as an element, structure, part, portion or the like extending or projecting laterally outward may refer to the respective object extending or projecting in a lateral direction (i.e., at an angle to the longitudinal direction), which may in particular be a radial direction or substantially radial direction (i.e., extending or projecting perpendicular or substantially perpendicular to the longitudinal direction).

The first end may face outwards, i.e., towards the outside of the battery case (e.g., away from the current collection base and/or the electrode assembly). The second end may face inwards, i.e., towards the interior of the battery case (e.g., towards the current collection base and/or the electrode assembly).

The body portion is inserted into (e.g., arranged in) the through hole and the insertion hole so as to extend inwards from the first end through the insertion hole in the electrode terminal and then through the through hole in the cap to the second end (e.g., along the current collection protrusion towards the current collection base).

As used herein, two directions or elements being substantially perpendicular may for example refer to the directions and elements, respectively, being (e.g., extending or projecting) at an angle of between 70° and 110°, in some examples between 80° and 100°, in one example between 85° and 95° and in one example between 88° and 92° to each other. As used herein, two directions or elements being substantially parallel (or being/extending in substantially the same direction) may for example refer to the directions and elements, respectively, being (e.g., extending or projecting) at an (acute) angle of between -20° and 20°, in some examples between -10° and 10°, in one example between -5° and 5° and in one example between -2° and 2° to each other.

At the first end (outer end) of the body portion, the first projecting portion (which may also be referred to as the outer projecting portion or outer fastening portion) projects (e.g., protrudes or juts) laterally (e.g., radially) outward from the body portion (e.g., at an angle, for example perpendicular or substantially perpendicular to a longitudinal direction or axis of the body part connecting the first and seconds ends thereof).

At the second end (inner end) of the body portion, the second projecting portion (which may also be referred to as the inner projecting portion or inner fastening portion) projects laterally (e.g., radially) outward from the body portion (e.g., at an angle, for example perpendicular or substantially perpendicular to a longitudinal direction or axis of the body part connecting the first and seconds ends thereof).

The first projecting portion may extend parallel to the electrode terminal (e.g., a surface such as a top surface thereof). The second projecting portion may extend parallel to the cap (e.g., a surface such as a bottom surface thereof).

One or both of the first and second projecting portions may for example have an annular shape extending around the body portion (e.g., the respective end thereof). The first and/or second projecting portion(s) may for example be an annular protrusion (e.g., flange or collar) around the body portion (e.g., the respective end thereof). In other examples, one or both of the first and second projecting portions may be divided into a plurality of segments, e.g., as detailed below.

One or both of the first and second projecting portions may be made of (e.g., comprise or consist of) a same material as the body portion. One or both of the first and second projecting portions may be integrally formed with the body portion (i.e., as a single piece rather than as a multi-piece assembly of separate pieces or parts being attached to each other). In some examples, the entire fastening member may be integrally formed as a single piece.

The cap and the electrode terminal (i.e., at least a part thereof) may be arranged between the first and second projecting portions, The cap and the electrode terminal may be pressed (e.g., pushed, clamped or squeezed) together by the first and second projecting portions of the fastening member. For example, one or both of the first and second projecting portions may press (e.g., be pressurized) in the direction of the cap.

Put differently, in the secondary battery according to an embodiment of the present disclosure, the first projecting portion (e.g., the first bent part) and/or the second projecting portion (e.g., the second bent part) of the fastening member (e.g., the rivet part) may be pressurized (e.g., biased or preloaded) in the direction of the cap plate.

The fastening member, e.g., one or both of the first projecting portion and the body portion, may be in contact with the electrode terminal. The fastening member may be electrically insulated from the cap, e.g., via one or both of the base insulating member and the gasket described below.

The fastening member may be or comprise a rivet. The first projecting portion may be a first bent portion of the rivet (which may also be referred to as a first bent part). The first bent portion may be bent toward the electrode terminal (e.g., relative to the body portion). The second projecting portion may be a second bent portion of the rivet (which may also be referred to as a second bent part). The second bent portion may be bent toward the cap (e.g., relative to the body portion). The fastening member may have been formed by riveting, for example by bending (e.g., deforming or curving) one or both of the first and second bent portions (e.g., relative to the body portion).

The second projecting portion may be thicker in a direction from the first end to the second end of the body portion (i.e., in the longitudinal direction of the body portion) than the first projecting portion. Put differently, in the secondary battery according to an embodiment of the present disclosure, the second bent part may be vertically thicker than the first bent part. A thickness of the second projecting portion in the longitudinal direction may for example be at least 1.1 times, in some examples at least 1.2 times, in some examples at least 1.5 times, in one example at least 2.0 times and in one example at least 3.0 times a thickness of the first projecting portion.

A maximum length by which the second projecting portion projects laterally outward from the body portion may greater than (e.g., at least 25% greater than, in some examples at least 50% greater than, in one example at least 100% greater than and in one example at least 200% greater than) a maximum length by which the first projecting portion projects laterally outward from the body portion. Put differently, the second projecting portion may project (e.g., protrude) farther from the body portion than the first projecting portion. The respective maximum length may for example be measured along the respective projecting portion and/or perpendicular to the longitudinal direction of the body portion.

In other words, in the secondary battery according to an embodiment of the present disclosure, a maximum length of the second bent part in a horizontal direction may be greater than a maximum length of the first bent part in a horizontal direction.

One or both of the first projecting portion and the second projecting portion may each be divided into a plurality of segments (e.g., two, three, four or more segments). Each of said segments may project laterally outward from the body portion (e.g., form a tab, cantilever or nose extending from the body portion). The segments may be spaced apart from each other (e.g., may not be in direct contact with each other but, e.g., be connected indirectly via the body portion and /or the other projecting portion). In some examples, the body portion may comprise a plurality of slits (e.g., cuts or openings) separating the segments from each other (i.e., arranged between adjacent segments). The slit may for example extend longitudinally along the body portion, e.g., up to the respectively other projecting portion. The segments may be arranged (e.g., distributed, for example equidistantly) around a circumference of the body portion.

A recess in which the first projecting portion of the fastening member is seated (e.g., received, arranged or placed thereon and/or therein) may be formed in the electrode terminal (e.g., in an upper or outer surface thereof) along a circumference of the insertion hole. The recess may form a seat or step in the circumference of the insertion hole for arranging the first projecting portion thereon (e.g., form a counterbore or countersink).

In other words, in the secondary battery according to an embodiment of the present disclosure, a seated groove in which the first projecting portion of the fastening member (e.g., the first bent part of the rivet part) is seated may be formed in the circumference of the insertion hole of the electrode terminal.

The first projecting portion of the fastening member may be arranged such that a top of the first projecting portion of the fastening member facing away from the cap is flush with (e.g., aligned with or at a same height as) or recessed from (e.g., at a lower height/further inward than) a top of the electrode terminal facing away from the cap. The top of the first projecting portion (e.g., outermost point or surface as seen from the battery case) may for example be recessed from a top of the electrode terminal (e.g., outermost point or surface) by between 0.05 mm and 10 mm, in some examples between 0.1 mm and 5 mm, in one example between 0.2 mm and 2.0 mm.

In other words, in the secondary battery according to an embodiment of the present disclosure, the first projecting portion of the fastening member (e.g., the first bent part of the rivet part) may be seated so that the first projecting portion of the fastening member (e.g., the first bent part of the rivet part) has a lower height than the top of the electrode terminal.

In the secondary battery according to an embodiment of the present disclosure, the cap assembly may further include a terminal insulating member disposed between the electrode terminal and the cap (e.g., the cap plate). The terminal insulating member may electrically insulate the electrode terminal and the cap from each other. A hole (which may be referred to as a terminal insulating hole) may be formed in the terminal insulating member. The body portion may extend through the terminal insulating hole. The terminal insulating member may have a plate shape. An accommodation recess (e.g., an accommodation groove) may be formed along a circumference of the through hole in an outer surface (e.g., the top surface) of the cap facing away from the case. The accommodation recess may for example have a rectangular shape, in particular a rounded rectangular shape (e.g., as seen along the vertical direction/perpendicular to the cap). The terminal insulating member or a part thereof (e.g., a bottom portion facing towards the cap) may be arranged in the accommodation recess. In some examples, the terminal insulating member may optionally comprise an insulating protrusion (e.g., a stepped portion on its bottom) that protrudes in a direction of the cap (e.g., inward). The insulating protrusion may be accommodated (e.g., arranged in or inserted into) in the accommodation recess.

In other words, in the secondary battery according to an embodiment of the present disclosure, an accommodation groove may be formed in the circumference of the through hole on a top surface of the cap plate. An insulating protrusion part that protrudes in the direction of the cap plate may be formed in the terminal insulating member. The insulating protrusion part may be accommodated in the accommodation groove.

In any of the above examples, the terminal insulating member, in particular the insulating protrusion, may be separated from a sidewall of the accommodation recess by a gap (e.g., in a direction parallel to the outer surface of the cap). The gap may be an empty space or void that is, e.g., filled with air. In some examples, the gap may extend around the entire circumference of the terminal insulating member and insulating protrusion, respectively, and/or the sidewall of the accommodation recess may not be in contact with the terminal insulating member and insulating protrusion, respectively. The gap may for example have a width (e.g., in the direction parallel to the outer surface of the cap) between 0.1 mm and 10 mm, in some examples between 0.2 mm and 5 mm, in one example between 0.5 mm and 2 mm.

In other words, in the secondary battery according to an embodiment of the present disclosure, a space isolated in a horizontal direction may be formed between the cap plate and the insulating protrusion part.

A terminal recess (e.g., a terminal groove) may be formed in a top surface (e.g., an outer surface) of the terminal insulating member facing away from the cap. The electrode terminal or a part thereof (e.g., a bottom portion facing the cap) may be arranged in the terminal recess. The terminal recess may for example have a rectangular shape, in particular a rounded rectangular shape (e.g., as seen along the vertical direction/perpendicular to the cap).

In some examples, the electrode terminal may comprise a terminal protrusion that protrudes (from the electrode terminal, in particular a bottom thereof) in a direction of the cap (e.g., in a direction of the terminal insulating member). The terminal protrusion may for example be a stepped (e.g., elevated) portion protruding from the bottom of the electrode terminal. The terminal protrusion may be accommodated in the terminal groove.

In other words, in the secondary battery according to an embodiment of the present disclosure, a terminal groove may be formed on a top surface of the terminal insulating member. A terminal protrusion part that protrudes in the direction of the terminal insulating member is formed in the electrode terminal. The terminal protrusion part is accommodated in the terminal groove.

The insertion hole (in the electrode terminal) may have a smaller lateral dimension (e.g., radius (or diameter), width and/or cross-sectional area) than the through hole (in the cap). The lateral dimension may characterize a size (e.g., lateral extent) of the respective hole perpendicular to an axis of the respective hole (e.g., in the plane of the electrode terminal and cap, respectively, and/or perpendicular to the longitudinal direction of the fastening member/body portion). The lateral dimension (e.g., radius) of the insertion hole may for example be between 50% and 98%, in some examples between 75% and 95%, in one example between 80% and 90% of the lateral dimension/radius of the through hole. The body portion of the fastening member may not be in contact with a sidewall of the through hole. The body portion may be in contact with a sidewall of the insertion hole.

Additionally or alternatively, the first projecting portion of the fastening member may project laterally outward from the body portion beyond an edge of the through hole in the cap. Put differently, as seen along the longitudinal direction, the first projecting portion may extend beyond the edge of the through hole so as to partially cover cap. For example, a length up to which the first projecting portion projects laterally outward from a center or central axis of the fastening member (e.g., a center or central axis of the body portion) may be larger than one half of a lateral extent (e.g., larger than the radius or larger than one half of the width or diameter) of the through hole, e.g., at least 10% larger, in some examples at least 20% larger and in one example at least 50% larger.

As mentioned above, the cap assembly may include a base insulating member, wherein the base insulating member may, e.g., be disposed between the cap plate and the electrode assembly.

In the secondary battery according to an embodiment of the present disclosure, the cap assembly may further include a gasket disposed between the cap (e.g., the cap plate) and the fastening member (e.g., the rivet part). The gasket or a part thereof (e.g., the insertion portion described below) may be inserted into the through hole in the cap. The gasket may be configured to seal an interface (e.g., a space) between the cap and the fastening member, e.g., so as to prevent an electrolyte and/or gas from leaking out between the cap and the fastening member through the through hole. The gasket (e.g., one or both of the insertion and support portions described below) may have an annular shape extending around the fastening member (e.g., the body portion thereof).

The gasket may comprise an insertion portion (which may also be referred to as insertion part or first sealing portion) inserted into the through hole. The insertion portion may be disposed between the body portion of the fastening member and a sidewall of the through hole (formed by the cap). The insertion portion may extend around the body portion of the fastening member.

The gasket may optionally further comprise a support portion (which may also be referred to as support part or second sealing portion) projecting laterally outward from the insertion portion, e.g., at an angle to, in particular perpendicular or substantially perpendicular to the insertion portion. The support portion may project laterally outward from an end, in particular an inner end, of the insertion portion. In other words, the gasket may have an L-shaped cross-section, for example with a first leg (the insertion portion) extending along the body portion of the fastening member (e.g., in the longitudinal direction/outwards) and a second leg extending along the second projecting portion of the fastening member (e.g., in a horizontal direction/parallel to the cap). The support portion may be disposed between the cap and the second projecting portion of the fastening member. The support portion may extend around the body portion of the fastening member. The support portion may be bent from the insertion part at one end (e.g., the inner end) of the insertion portion.

Put differently, in the secondary battery according to an embodiment of the present disclosure, the gasket may include an insertion part inserted into the through hole and a support part bent at one end of the insertion part and disposed under the cap plate.

In some examples, an end (e.g., an end face) of the insertion portion of the gasket facing away from the support portion (e.g., the outer end of the insertion portion) may be in (direct) contact with the electrode terminal, in particular a bottom (e.g., a bottom surface) of the electrode terminal facing towards the cap. For this, the insertion hole may for example have a smaller radius (or other lateral dimension) than the through hole, e.g., as detailed above. The end of the insertion portion of the gasket may be in contact with a portion of the bottom of the electrode terminal forming a rim extending around the insertion hole. The fastening member, in contrast, may not be in contact with the bottom of the electrode terminal in some examples (but, e.g., only with one or both of a sidewall of the insertion hole and a top surface of the electrode terminal facing away from the cap).

Put differently, in the secondary battery according to an embodiment of the present disclosure, the insertion hole has a smaller radius than the through hole. The top of the insertion part of the gasket may come into contact with a bottom of the electrode terminal.

The support portion of the gasket may have a thickness identical with a thickness of the base insulating member. The thickness may for example be measured perpendicular to the inner surface (e.g., the bottom surface) of the cap (on which the support portion and the base insulating member may be disposed), e.g., along the vertical direction of the battery case and/or the longitudinal direction of the fastening member/body portion. Put differently, in the secondary battery according to an embodiment of the present disclosure, the support part of the gasket may have a thickness vertically identical with the thickness of the base insulating member.

The second projecting portion of the fastening member may extend along the support portion of the gasket up to and, optionally, onto the base insulating member. The second projecting portion may be in contact with one or both of the gasket and the base insulating member (e.g., disposed on a bottom surface thereof).

Put differently, in the secondary battery according to an embodiment of the present disclosure, the second bent part of the rivet part may extend up to the base insulating member after passing through the gasket.

The support portion of the gasket and the base insulating member may be separated from each other by a gap (e.g., in a direction parallel to the inner/bottom surface of the cap). The gap may be an empty space or void that is, e.g., filled with air. In some examples, the gap may extend around the entire circumference of the support portion of the gasket and/or the support portion of the gasket may not be in contact with the base insulating member. The gap may for example have a width (e.g., in the direction parallel to the inner surface of the cap) between 0.1 mm and 10 mm, in some examples between 0.2 mm and 5 mm, in one example between 0.5 mm and 2 mm.

Put differently, in the secondary battery according to an embodiment of the present disclosure, the support part of the gasket and the base insulating member may be disposed to be spaced apart from each other in a horizontal direction.

A groove may be formed in a portion of the gasket in which the insertion portion and the support portion meet (e.g., come in contact with each other or intersect). The groove may be formed in a surface of the gasket facing the cap. The groove may be formed at (e.g., along) a bend (e.g., a kink or edge) of the gasket connecting the insertion and support portions (e.g., at which the support portion projects from the insertion portion). The groove may for example be formed at and in particular along an interior edge of the gasket that faces the cap and at which the insertion and support portions meet. The groove may extend around an entire circumference of the gasket. The groove may for example have a depth between 0.1 mm and 5 mm, in some examples between 0.2 mm and 2 mm. The cap may comprise a gasket protrusion inserted into the groove of the gasket. The gasket protrusion may extend along an edge (e.g., a rim) of the through hole. The gasket protrusion may completely fill the groove of the gasket.

Put differently, in the secondary battery according to an embodiment of the present disclosure, a groove may be formed in a portion of the gasket in which the insertion part and the support part come into contact with each other. A hole protrusion part inserted into the groove of the gasket may be formed at a bottom of the through hole of the cap plate. A fastening protrusion may be formed in (e.g., on) the second projecting portion of the fastening member (e.g., in the second bent part of the rivet) protruding in a direction toward the cap (e.g., on an upper surface of the second projecting portion). A fastening groove may be formed in one or both of the base insulating member and the gasket. The fastening protrusion may be inserted into the fastening groove. The fastening protrusion may for example serve to hold the fastening member in place (and/or facilitate alignment of the fastening member) relative to the base insulating member and/or the gasket, and/or vice-versa.

In some examples, a plurality of fastening protrusions may be formed in the second projecting portion. The plurality of fastening protrusions may be spaced apart from each other. In some examples, some or all of the fastening protrusions may be distributed (e.g., equidistantly) on the second projecting portion around the body portion of the fastening member. A plurality of fastening grooves may be formed in the base insulating member and/or the gasket. Each fastening protrusion may be inserted into one of the fastening grooves, e.g., into a respective fastening groove.

Put differently, in the secondary battery according to an embodiment of the present disclosure, at least one rivet protrusion may be formed in the second bent part of the rivet part in a direction toward the cap plate. A fastening groove into which the rivet protrusion is inserted is formed in at least one of the base insulating member or the gasket.

In the secondary battery according to an embodiment of the present disclosure, the insertion hole may have a smaller radius than the through hole. The first projecting portion of the fastening member (e.g., the first bent part of the rivet part) may extend more outward than the through hole.

As mentioned above, the current collection member may comprise a current collection base, in particular a current collection plate. The current collection base (e.g., a bottom and/or upper surface thereof) may be electrically connected (e.g., welded) to the plurality of electrode tabs. The current collection protrusion may protrude from the current collection base (e.g., from an upper/outer surface thereof).

The current collection base may optionally comprises a fixing structure such as a fixing recess and/or a fixing protrusion (e.g., on its upper surface) that (e.g., mechanically) engages a corresponding counterpart (e.g., a correspondingly shaped portion, for example a protrusion and a recess, respectively) on the second projecting portion (e.g., a bottom surface thereof), for example for fixing the current collection member and the fastening member relative to each other. In one example, the current collection base may comprise a recess in which a bottom of the second projecting portion is arranged (e.g., by press-fitting).

The secondary battery and the cap assembly according to the first aspect of the present disclosure described above may further include any feature or combination of features of the secondary battery/cap assembly according to the second aspect, the third aspect and/or the fourth aspect of the present disclosure. Additionally or alternatively, any feature or combination of features of the secondary battery/cap assembly according to the first aspect may be omitted, in particular those features not present in the secondary battery/cap assembly according to the second aspect, the third aspect and/or the fourth aspect of the present disclosure.

In the following, a secondary battery and a cap assembly according to a second aspect of the present disclosure are described.

A secondary battery according to an embodiment of the present disclosure may include an electrode assembly.

A secondary battery according to an embodiment of the present disclosure may include a case configured to accommodate the electrode assembly and including an opening.

A secondary battery according to an embodiment of the present disclosure may include a cap assembly combined with the case and configured to cover the opening.

A cap assembly according to an embodiment of the present disclosure may include a cap (e.g., a cap plate) including a through hole.

A cap assembly according to an embodiment of the present disclosure may include a rivet part (or other fastening member) including a body part (body portion) inserted into the through hole and configured to extend toward the outside of the case in a first direction (longitudinal direction) and a fastening portion (which may, e.g., comprise the first and/or second projecting portion) configured to extend from the body part in a second direction (e.g., a lateral or radial direction) that intersects the first direction.

A cap assembly according to an embodiment of the present disclosure may include a base insulating member disposed between the cap (e.g., cap plate) and the electrode assembly.

A cap assembly according to an embodiment of the present disclosure may include a gasket disposed between the cap (e.g., cap plate) and the rivet part/fastening member.

At least a part of the base insulating member and at least a part of the gasket according to an embodiment of the present disclosure may be aligned in the second direction between the cap/cap plate and the fastening portion, and may come into contact with the fastening portion in the first direction.

The at least a part of the base insulating member and the at least a part of the gasket according to an embodiment of the present disclosure may be placed at the same height in the first direction within the cap assembly.

The at least a part of the base insulating member and the at least a part of the gasket according to an embodiment of the present disclosure may have the same length in the first direction.

The fastening portion (e.g., the second projecting portion thereof) according to an embodiment of the present disclosure may include a first pressurization portion configured to come into contact with the base insulating member.

The fastening portion (e.g., the second projecting portion thereof) according to an embodiment of the present disclosure may include a second pressurization portion configured to come into contact with the gasket.

The base insulating member and the gasket according to an embodiment of the present disclosure may be spaced apart from each other in the second direction.

A cap assembly according to an embodiment of the present disclosure may include a space (e.g., a gap) formed between the base insulating member and the gasket.

The gasket according to an embodiment of the present disclosure may include a first sealing portion (also referred to as an insertion portion) disposed between the body part and the cap plate.

The gasket according to an embodiment of the present disclosure may include a second sealing portion (also referred to as a support portion) configured to extend from the first sealing portion in the second direction and aligned with the base insulating member in the second direction.

A secondary battery according to an embodiment of the present disclosure may include an electrode terminal spaced apart from the cap plate in the first direction.

The fastening portion according to an embodiment of the present disclosure may include an outer fastening portion (also referred to as first projecting portion) bent from the body part and connected to the electrode terminal.

The fastening portion according to an embodiment of the present disclosure may include an inner fastening portion (also referred to as second projecting portion) bent from the body part between the gasket and the electrode assembly and configured to come into contact with the gasket.

A secondary battery according to an embodiment of the present disclosure may include a current collection protrusion inserted into a hollow formed in the body part and a current collection member including a current collection plate configured to extend from the current collection protrusion in the second direction.

The fastening portion (e.g., the second projecting portion) according to an embodiment of the present disclosure may be disposed between the gasket and the current collection plate.

The rivet part (or other fastening member) according to an embodiment of the present disclosure may include a rivet protrusion (fastening protrusion) configured to protrude toward the gasket.

The gasket according to an embodiment of the present disclosure may include a fastening groove in which the rivet protrusion is accommodated.

The cap plate according to an embodiment of the present disclosure may include a hole protrusion part (also referred to as gasket protrusion) configured to protrude toward the gasket.

The gasket according to an embodiment of the present disclosure may include a groove in which the hole protrusion part is accommodated.

The secondary battery and the cap assembly according to the second aspect of the present disclosure described above may further include any feature or combination of features of the secondary battery/cap assembly according to the first aspect, the third aspect and/or the fourth aspect of the present disclosure. Additionally or alternatively, any feature or combination of features of the secondary battery/cap assembly according to the second aspect may be omitted, in particular those features not present in the secondary battery/cap assembly according to the first aspect, the third aspect and/or the fourth aspect of the present disclosure.

In one embodiment, a secondary battery according to the second aspect of the present disclosure comprises: an electrode assembly (e.g., comprising an electrode portion and a plurality of electrode tabs formed at one side of the electrode portion); a case accommodating or configured to accommodate the electrode assembly and comprising an opening; and a cap assembly combined or configured to be combined with the case (e.g., the opening thereof) and configured to cover the opening, wherein the cap assembly comprises: a cap (e.g., a cap plate) in which a through hole is formed; a fastening member (e.g., a rivet part) comprising a body portion (body part) inserted into the through hole and extending toward an outside of the case and a second projecting portion (inner fastening portion, e.g., a second bent part) projecting laterally outward from the body part between the cap and the electrode assembly; a base insulating member disposed between the cap and the electrode assembly; and a gasket disposed between the cap and the fastening member, wherein at least a part of the base insulating member and at least a part of the gasket (e.g., a support portion thereof) are aligned between the cap and the second projecting portion and come into contact with the second projecting portion.

Additionally, this secondary battery and/or this cap assembly may comprise any feature or combination of features as described above for the secondary battery/cap assembly according to the first aspect and/or second aspect, for example the current collection member, the electrode terminal and/or the first projecting portion of the fastening member.

In the following, a secondary battery and a cap assembly according to a third aspect of the present disclosure is described.

A secondary battery according to an embodiment of the present disclosure may include an electrode assembly including an electrode tab (e.g., a foil tab).

A secondary battery according to an embodiment of the present disclosure may include a case configured to accommodate the electrode assembly and including an opening.

A secondary battery according to an embodiment of the present disclosure may include a cap assembly combined with the case and configured to cover the opening.

A secondary battery according to an embodiment of the present disclosure may include a current collection member configured to connect the electrode tab (e.g., foil tab) and the cap assembly.

A cap assembly according to an embodiment of the present disclosure may include a cap (e.g., a cap plate) including a through hole.

A cap assembly according to an embodiment of the present disclosure may include a fastening member (e.g., a rivet part) including a body part (body portion) inserted into the through hole and configured to extend toward the outside of the case in a first direction (e.g., the longitudinal direction) and a hollow formed in the body part.

A cap assembly according to an embodiment of the present disclosure may include a gasket including a first sealing portion (insertion portion) disposed between the rivet part and the cap plate and a second sealing portion (support portion) disposed between the current collection member and the cap plate.

The current collection member according to an embodiment of the present disclosure may include a current collection protrusion inserted into the hollow in the first direction.

The current collection member according to an embodiment of the present disclosure may include a current collection plate extended from the current collection protrusion and configured to overlap the second sealing portion in the first direction and to pressurize the second sealing portion toward the cap plate.

The rivet part according to an embodiment of the present disclosure may include a fastening portion (e.g., an inner fastening portion or second projecting portion) disposed between the current collection plate and the second sealing portion and configured to come into contact with the second sealing portion.

The current collection plate according to an embodiment of the present disclosure may include a first current collection portion configured to overlap the second sealing portion and the fastening portion in the first direction.

The current collection plate according to an embodiment of the present disclosure may include a second current collection portion extended from the first current collection portion in the second direction (e.g., a lateral or radial direction and/or a horizontal direction) and configured to not overlap the second sealing portion in the first direction.

The first sealing portion according to an embodiment of the present disclosure may be disposed between the cap/cap plate and the current collection protrusion.

The current collection protrusion according to an embodiment of the present disclosure may be configured to pressurize the first sealing portion toward the cap plate.

A secondary battery according to an embodiment of the present disclosure may include a base insulating member disposed between the current collection plate and the cap plate.

The current collection plate according to an embodiment of the present disclosure may be configured to pressurize the base insulating member toward the cap plate.

The secondary battery and the cap assembly according to the third aspect of the present disclosure described above may further include any feature or combination of features of the secondary battery/cap assembly according to the first aspect, the second aspect and/or the fourth aspect of the present disclosure. Additionally or alternatively, any feature or combination of features of the secondary battery/cap assembly according to the third aspect may be omitted, in particular those features not present in the secondary battery/cap assembly according to the first aspect, the second aspect and/or the fourth aspect of the present disclosure.

In one embodiment, a secondary battery according to the third aspect of the present disclosure comprises: an electrode assembly comprising an electrode tab (e.g., plurality of electrode tabs), wherein the electrode tab(s) may for example be formed at one side of an electrode portion of the electrode assembly; a case configured to accommodate the electrode assembly and comprising an opening; a cap assembly combined with the case (e.g., the opening thereof) and configured to cover the opening; and a current collection member configured to connect (e.g., hold together) the electrode tab and the cap assembly, wherein the cap assembly comprises: a cap (e.g., a cap plate) comprising a through hole; a fastening member (e.g., a rivet part) comprising a body part (body portion) inserted into the through hole and extended toward an outside of the case and a hollow formed in the body part; and a gasket comprising a first sealing portion (insertion portion) disposed between the fastening member and the cap and a second sealing portion (support portion) disposed between the current collection member and the cap, wherein the current collection member comprises a current collection protrusion that protrudes from the current collection member (e.g., a current collection plate thereof extended from the current collection protrusion) and is inserted into the hollow of the body part; wherein the current collection member (e.g., the current collection plate thereof) is disposed to overlap the second sealing portion and configured to pressurize the second sealing portion toward the cap plate.

Additionally, this secondary battery and/or this cap assembly may comprise any feature or combination of features as described above for the secondary battery/cap assembly according to the first aspect, second aspect and/or third aspect, for example the electrode terminal and/or the first projecting portion and/or the second projecting portion of the fastening member.

In the following, a secondary battery and a cap assembly according to a fourth aspect of the present disclosure are described.

A secondary battery according to an embodiment of the present disclosure may include an electrode assembly (which may, e.g., include an electrode portion and one or more electrode tabs formed at one side of the electrode portion).

A secondary battery according to an embodiment of the present disclosure may include a case configured to accommodate the electrode assembly and including an opening.

A secondary battery according to an embodiment of the present disclosure may include a cap assembly combined or configured to be combined with the case (e.g., the opening thereof) and configured to cover the opening.

A cap assembly according to an embodiment of the present disclosure may include a cap (e.g., a cap plate) including a cap body (e.g., cap plate body) and a cap recess (also referred to as accommodation recess, e.g., a plate recess) depressed and formed in the cap body.

A cap assembly according to an embodiment of the present disclosure may include a terminal insulating member including an insulating body stacked along with the cap plate in a first direction (e.g., the longitudinal and/or vertical direction), an insulating member recess (also referred to as terminal recess) depressed and formed in the insulating body, and an insulating protrusion part seated in the cap recess (e.g., plate recess).

A cap assembly according to an embodiment of the present disclosure may include an electrode terminal including a terminal edge stacked along with the terminal insulating member in the first direction and a terminal protrusion part (terminal protrusion) seated in the insulating member recess.

A cap (e.g., cap plate) according to an embodiment of the present disclosure may include a step portion (e.g., a plate step portion) formed in the first direction.

The terminal insulating member according to an embodiment of the present disclosure may include an insulating step portion formed in the first direction and configured to face the plate step portion in a second direction that intersects the first direction.

The plate step portion and the insulating step portion according to an embodiment of the present disclosure may be spaced apart from each other in the second direction (e.g., a radial and/or horizontal direction).

The cap assembly according to an embodiment of the present disclosure may include a space (gap) formed between the plate step portion and the insulating step portion.

The electrode terminal according to an embodiment of the present disclosure may include a terminal step portion formed in the first direction with respect to the insulating member recess and configured to connect the terminal protrusion part and the terminal edge.

The cap plate, the terminal insulating member, and the electrode terminal according to an embodiment of the present disclosure may be stacked in the first direction with respective step shapes in the first direction.

The secondary battery and the cap assembly according to the fourth aspect of the present disclosure described above may further include any feature or combination of features of the secondary battery/cap assembly according to the first aspect, the second aspect and/or the third aspect of the present disclosure. Additionally or alternatively, any feature or combination of features of the secondary battery/cap assembly according to the fourth aspect may be omitted, in particular those features not present in the secondary battery according to the first aspect, the second aspect and/or the third aspect of the present disclosure.

In one embodiment, a secondary battery according to the third aspect of the present disclosure comprises: an electrode assembly (which may, e.g., include an electrode portion and one or more electrode tabs formed at one side of the electrode portion); a case configured to accommodate the electrode assembly and comprising an opening; and a cap assembly combined or configured to be combined with the case (e.g., the opening thereof) and configured to cover the opening, wherein the cap assembly comprises: a cap (e.g., a cap plate) comprising an accommodation recess formed in the cap (e.g., an outer surface thereof facing away from the case); a terminal insulating member including a terminal recess formed in the terminal insulating member (e.g., a top surface thereof) and an insulating protrusion (insulating protrusion part) that is accommodated in the accommodation recess (and may, e.g., protrude from the terminal insulating member in a direction of the cap); and an electrode terminal comprising a terminal protrusion (terminal protrusion part) accommodated in the terminal recess (and, e.g., protruding in a direction of the terminal insulating member).

Additionally, this secondary battery and/or this cap assembly may comprise any feature or combination of features as described above for the secondary battery/cap assembly according to the first aspect, second aspect, third aspect and/or fourth aspect, for example the current collection member and/or the fastening member.

The cap assembly of the secondary battery according to an embodiment of the present disclosure may prevent the leakage of an electrolyte and simplify an assembly process by including the rivet part.

The secondary battery according to an embodiment of the present disclosure can enhance sealing performance in an area near the rivet part because the gasket is disposed in the area near the rivet part.

The secondary battery according to an embodiment of the present disclosure can reduce a thickness in the area near the rivet part because the gasket and the base insulating member are aligned in one direction.

The secondary battery according to an embodiment of the present disclosure can improve an adhesive force with another part of the gasket because the gasket is pressurized by the fastening portion of the rivet part and the current collection plate.

The cap assembly according to any one of the embodiments described herein (e.g., according to the first, second third and/or fourth aspects), optionally in combination with one or both of the current collection member and the electrode assembly, may also be provided individually, i.e., not as part of an (e.g., assembled) secondary battery but as a battery part (e.g., separate from the case and, optionally, other components of the secondary battery).

Accordingly, the present disclosure also provides a cap assembly for use in a secondary battery, in particular for covering an opening of a case of the secondary battery, wherein the cap assembly comprises: a cap in which a through hole is formed; an electrode terminal in which an insertion hole is formed, the electrode terminal being arranged over the cap so that the through hole and the insertion hole overlap each other; and a fastening member. The fastening member comprises a hollow body portion configured to receive a current collection protrusion of a current collection member, the body portion extending from a first end through the insertion hole in the electrode terminal and then through the through hole in the cap to a second end. The fastening member further comprises a first projecting portion projecting laterally outward from the body portion at the first end of the body portion, and a second projecting portion projecting laterally outward from the body portion at the second end of the body portion.

The cap assembly may additionally comprise any feature or combination of features as described above for the cap assembly of the secondary battery according to the present disclosure (e.g., the first, second, third and fourth aspects thereof).

The present disclosure further provides a battery part comprising said cap assembly and a current collection member for a secondary battery, in particular a current collection member configured to be electrically connected to a plurality of electrode tabs of an electrode assembly of a secondary battery. The current collection member comprises a current collection protrusion that protrudes from the current collection member and is inserted or configured to be inserted into the hollow body portion of the fastening member.

The current collection member may additionally comprise any feature or combination of features as described above for the current collection member of the secondary battery according to the present disclosure (e.g., the first, second, third and fourth aspects thereof). Additionally or alternatively, the battery part may comprise any feature or combination of features as described above for the secondary battery according to the present disclosure (e.g., the first, second, third and fourth aspects thereof), for example an electrode assembly and/or a case as described above.

### BRIEF DESCRIPTION OF THE DRAWINGS

FIG. 1 is a perspective view illustrating a secondary battery according to an embodiment of the present disclosure.
FIG. 2 is an exploded perspective view illustrating a cap assembly in the secondary battery according to an embodiment of the present disclosure.
FIG. 3 is a perspective view illustrating an electrode assembly in which a plurality of first and second electrode tabs has been formed in an electrode portion in the secondary battery according to an embodiment of the present disclosure.
FIG. 4A and 4B are a diagram illustrating a first electrode plate and a second electrode plate in the secondary battery according to an embodiment of the present disclosure.
FIG. 5 is an exploded view illustrating the cap assembly according to an embodiment of the present disclosure.
FIG. 6 is a diagram conceptually illustrating how an electrode terminal and a terminal insulating member are seated in a cap plate according to an embodiment of the present disclosure.
FIG. 7 is a diagram illustrating the bottoms of the electrode terminal and the terminal insulating member according to an embodiment of the present disclosure.
FIG. 8A and 8B are a diagram illustrating a fastening member according to an embodiment of the present disclosure.
FIG. 9A, 9B and 9C are a diagram illustrating various modified embodiments of the fastening member according to an embodiment of the present disclosure.
FIG. 10 is a cross-sectional view illustrating the cap assembly according to an embodiment of the present disclosure.
FIG. 11 is a cross-sectional view illustrating a cap assembly according to another embodiment of the present disclosure.
FIG. 12 is a diagram illustrating a current collection member inserted into the cap assembly according to an embodiment of the present disclosure.
FIG. 13A and 13B are a diagram illustrating the second projecting portion of the fastening member seated in a current collection plate in which a first fixing groove has been formed according to another embodiment of the present disclosure.
FIG. 14 is a diagram illustrating the second projecting portion of the fastening member combined with the current collection plate according to another embodiment of the present disclosure.
FIG. 15A is a diagram illustrating the cap plate and a base insulating member according to an embodiment of the present disclosure.
FIG. 15B is a diagram illustrating the bottom of the base insulating member.
FIG. 16 is a cross-sectional view illustrating the electrolyte inlet of the cap plate and the guide hole of the base insulating member according to an embodiment of the present disclosure.
FIG. 17 is a diagram conceptually illustrating a process of the electrode tabs and a current collection member being combined in the secondary battery according to an embodiment of the present disclosure.
FIG. 18 is a diagram conceptually illustrating a process of the cap assembly and the current collection member being combined in the secondary battery according to an embodiment of the present disclosure.
FIG. 19 is a diagram conceptually illustrating a process of the current collection member and the electrode tabs being combined when the electrode tabs are formed on both sides of the electrode assembly in a secondary battery according to another embodiment of the present disclosure.
FIG. 20 is a diagram conceptually illustrating a process of the cap assembly being combined with the current collection member in the secondary battery according to another embodiment of the present disclosure.
FIG. 21 is a diagram conceptually illustrating an insulating tape attached in the state in which the electrode assembly and the current collection member have been combined according to an embodiment of the present disclosure.
FIG. 22 is a diagram conceptually illustrating that two electrode tabs having the same polarity are bonded to one current collection member according to another embodiment of the present disclosure.
FIG. 23 is a diagram conceptually illustrating a process of the cap assembly being combined with the current collection member in the secondary battery according to another embodiment of the present disclosure.
FIG. 24 is a diagram conceptually illustrating electrode tabs having different polarities formed on both sides of the electrode assembly and two electrode tabs having the same polarity bonded to one current collection member in the secondary battery according to another embodiment of the present disclosure.
FIG. 25 is a diagram conceptually illustrating a process of the cap assembly being combined with the current collection member in the secondary battery according to another embodiment of the present disclosure.
FIG. 26 is a diagram illustrating a secondary battery including two electrode portions according to another embodiment of the present disclosure.
FIG. 27 is a diagram illustrating electrode tabs formed in the two electrode portions bonded to an electrode member according to another embodiment of the present disclosure.
FIG. 28A is a cross-sectional view illustrating the cap assembly according to an embodiment of the present disclosure.
FIG. 28B is a cross-sectional view illustrating a cap assembly according to another embodiment of the present disclosure.
FIG. 29A is a cross-sectional view illustrating a cap assembly according to an embodiment of the present disclosure.
FIG. 29B is a cross-sectional view illustrating a cap assembly according to another embodiment of the present disclosure.
FIG. 30A is a diagram illustrating the state in which an electrode terminal has been inserted into the cap assembly according to an embodiment of the present disclosure.
FIG. 30B is a diagram illustrating the state in which the electrode terminal has been inserted into the cap assembly according to another embodiment of the present disclosure.

### DETAILED DESCRIPTION

The present disclosure may be modified in various ways and may have various embodiments. Specific embodiments are to be illustrated in the drawings and to be described in the detailed description. It is however to be understood that the present disclosure is not intended to be limited to the specific embodiments, but that the specific embodiments include all of modifications, equivalents and/or substitutions included in the spirit and technical scope of the present disclosure.

For ease of description, various features and elements of the present disclosure may be disclosed in combination in the embodiments described below. Unless mentioned otherwise, this does, however, not imply any functional or structural link between the respective features and elements. Each individual one of the features and elements (and each combination of features and elements) described below may also be present in the vent structure, the housing part and/or the secondary battery according to the present disclosure in isolation and separate from the other features and elements of the respective embodiment. This applies in particular to the cap assembly (optionally in combination with the current collection member), which may also be provided individually, i.e., not as part of an (e.g., assembled) secondary battery but as a separate part (e.g., separate from the other components of the secondary battery).

The terms used in the present disclosure are used to only describe specific embodiments and are not intended to restrict the present disclosure. An expression of the singular number should be construed as including an expression of the plural number unless clearly defined otherwise in the context. It is to be understood that in the present disclosure, a term, such as "include (or comprise)" or "have", is intended to designate the presence of a characteristic, a number, a step, an operation, a component, a part or a combination of them described in the specification and does not exclude the possible existence or addition of one or more other characteristics, numbers, steps, operations, components, parts or combinations of them in advance.

Hereinafter, embodiments of the disclosure are described in detail with reference to the accompanying drawings. It is to be noted that the same reference numbers are used to refer to the same components in the accompanying drawings. Furthermore, a detailed description of known functions or constructions that may make the subject matter of the disclosure vague will be omitted. For the same reason, in the accompanying drawings, some components are enlarged, omitted or schematically depicted.

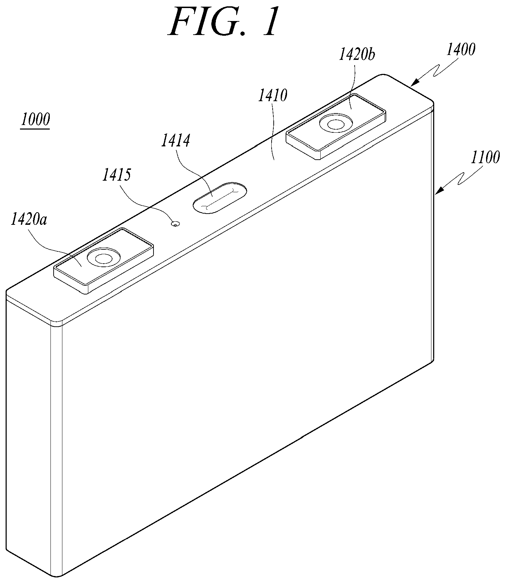

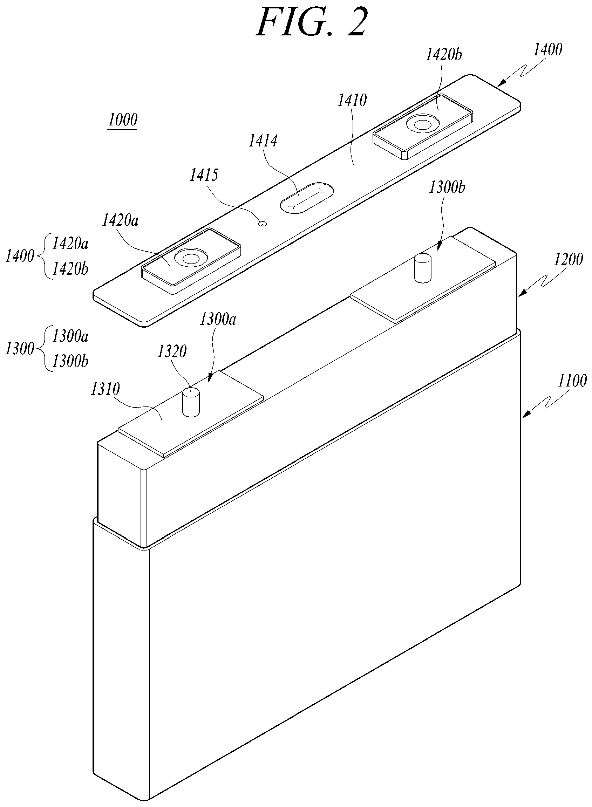

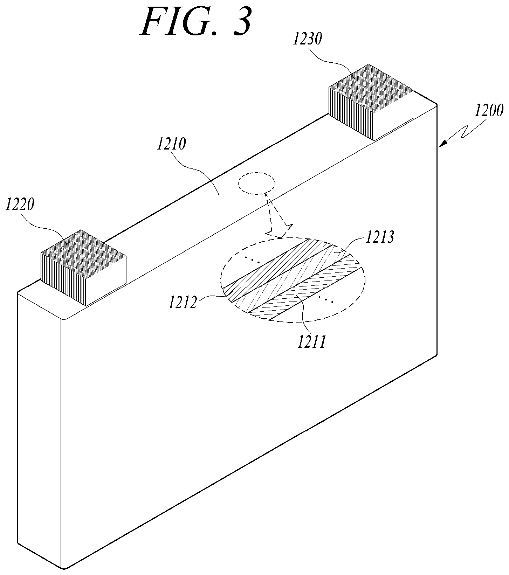

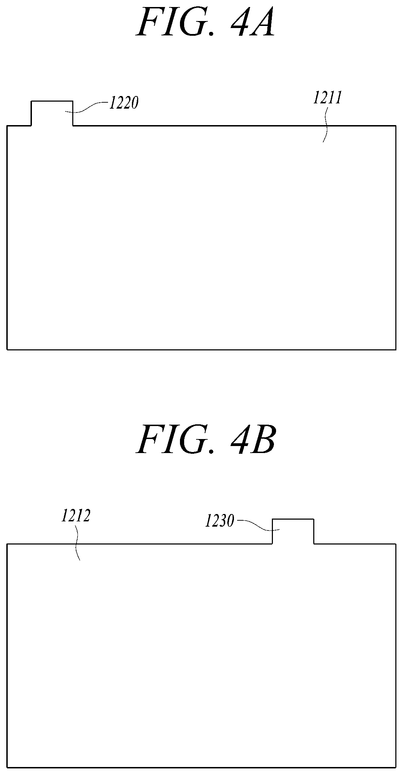

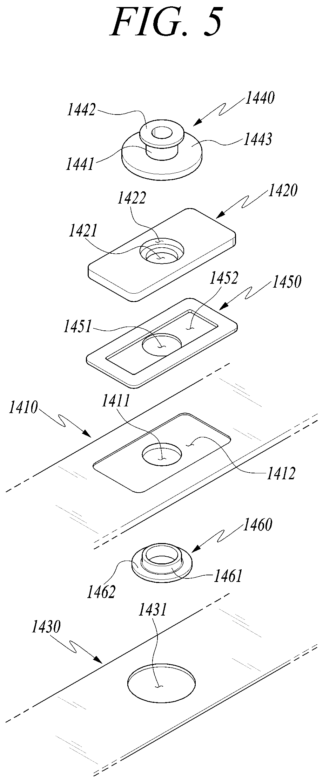

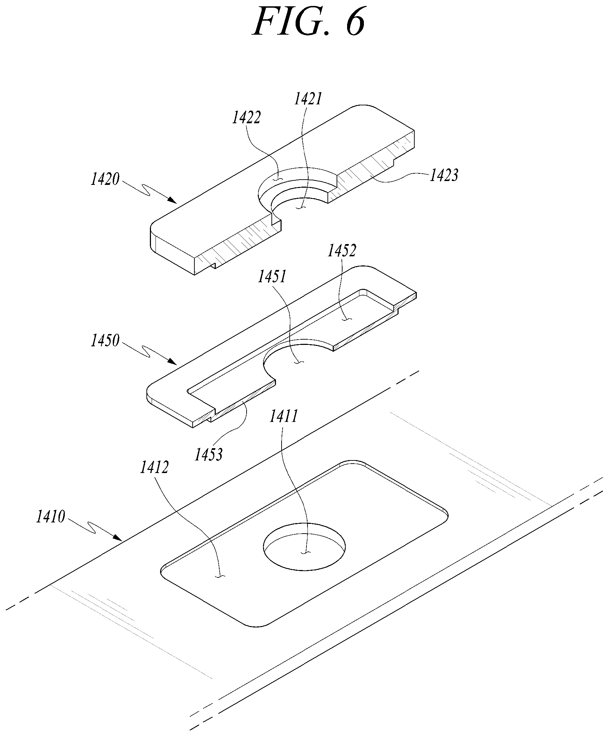

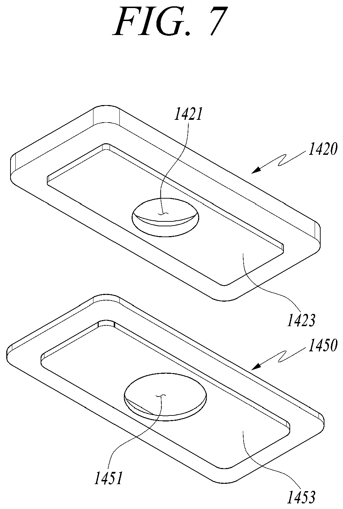

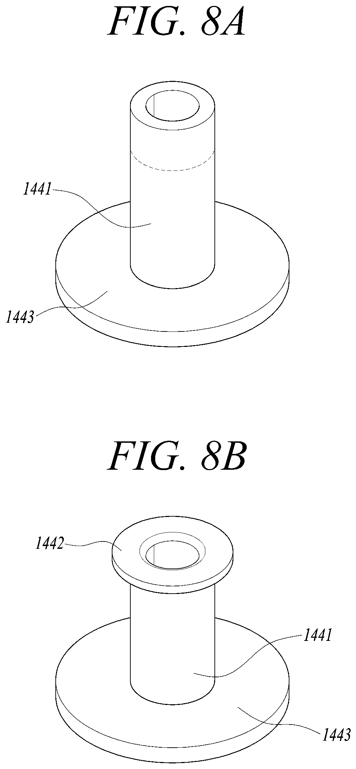

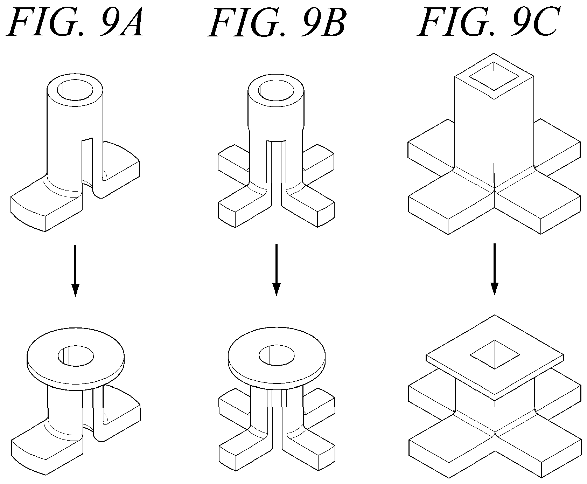

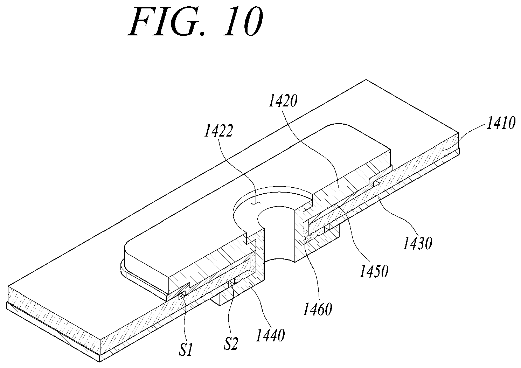

FIG. 1 is a perspective view illustrating a secondary battery according to an embodiment of the present disclosure. FIG. 2 is an exploded perspective view illustrating a cap assembly in the secondary battery according to an embodiment of the present disclosure. FIG. 3 is a perspective view illustrating an electrode assembly in which a plurality of first and second electrode tabs (e.g., foil tabs) has been formed in an electrode portion in the secondary battery according to an embodiment of the present disclosure. FIG. 4A and 4B are a diagram illustrating a first electrode plate and a second electrode plate in the secondary battery according to an embodiment of the present disclosure. FIG. 5 is an exploded view illustrating the cap assembly according to an embodiment of the present disclosure. FIG. 6 is a diagram conceptually illustrating how an electrode terminal and a terminal insulating member are seated in a cap plate according to an embodiment of the present disclosure. FIG. 7 is a diagram illustrating the bottoms of the electrode terminal and the terminal insulating member according to an embodiment of the present disclosure. FIG. 8A and 8B are a diagram illustrating a fastening member according to an embodiment of the present disclosure. FIG. 9A, 9B and 9C are a diagram illustrating various modified embodiments of the fastening member according to an embodiment of the present disclosure. FIG. 10 is a cross-sectional view illustrating the cap assembly according to an embodiment of the present disclosure.

As mentioned above, directions, orientations and similar geometric terms may be defined relative to the case of the secondary battery, in particular relative to the opening therein and/or the cap covering the opening. A side or surface of the secondary battery formed by the cap (e.g., the outer surface thereof facing away from the inside of the battery case) may be referred to as a top side or surface of the secondary battery (without intending to imply any particular or preferred orientation with respect to the direction of gravity or to entities such as a device that the battery is used in). Other geometric terms are to be understood as defining a relative geometric relation to this top side or surface (with, e.g., a bottom or lower side or surface of the battery case referring to the side or surface of the battery opposite to the top side or surface).As illustrated in FIGS. 1 to 10, the secondary battery 1000 according to an embodiment of the present disclosure includes a case 1100, an electrode assembly 1200, a current collection member 1300, and a cap assembly 1400. The cap assembly 1400, optionally in combination with one or both of the current collection member 1300 and the electrode assembly 1200, may also be provided as an individual battery part separate from, e.g., the case 1100 and other components of the secondary battery 1100.

The case 1100 may form an appearance (e.g., outer shape and/or dimensions) of the secondary battery 1000. The case 1100 may have a space formed therein in which the electrode assembly 1200 can be accommodated. The case 1100 may have an opening formed in one surface thereof (referred to as the top surface of the case 1100). In the present embodiment, the case 1100 has a rectangular parallelepiped shape, but is not limited thereto and may be variously modified (e.g., have other prismatic and in particular quadrilateral prismatic shapes). The material of the case 1100 may be a rigid material capable of protecting the electrode assembly 1200 accommodated in the case 1100. For example, the case 1100 may be made of metal, such as aluminum or stainless steel.

An electrolyte may be accommodated in the case 1100 along with the electrode assembly 1200. The electrolyte is not particularly limited and may for example be made of (e.g., comprise or consist of) lithium salts, such as LiPF6 or LiBF4, in an organic solvent, such as EC, PC, DEC, EMC, or DMC. The electrolyte may be a liquid, a solid, or a gel phase.

The electrode assembly 1200 is accommodated in the case 1100. As illustrated in FIG. 3, the electrode assembly 1200 includes an electrode portion 1210 (which may also be referred to as an electrode part) and a plurality of electrode tabs 1220 and 1230, which may for example be embodied as foil tabs.

The electrode assembly 1200 and the electrode portion 1210 are not particularly limited and may be embodied in various ways, e.g., as a stacked or wound electrode assembly/electrode portion. For example, the electrode portion 1210 may include a plurality of first electrode plates 1211 (e.g., electrode sheets or different portions of a same electrode sheet or plate), a plurality of second electrode plates 1212, and optionally a separator 1213. An active material may be applied to the plurality of first electrode plates 1211 and the plurality of second electrode plates 1212. An active material, such as transfer metal oxide, may be applied to the first electrode plate 1211, for example, a metal plate made of aluminum. The first electrode plate 1211 may be a positive electrode plate. An active material, such a graphite or carbon, may be applied to the second electrode plate 1212, for example, a metal plate made of copper or nickel. The second electrode plate 1212 may be a negative electrode plate.

The separator 1213 may be disposed between the plurality of first and second electrode plates 1211 and 1212. The separator 1213 may prevent a short-circuit between the plurality of first and second electrode plates 1211 and 1212. The material of the separator may be polyethylene, polypropylene, or composite materials thereof. In some examples, the secondary battery 1000 may not comprise a (distinct) separator 1213. The secondary battery may for example be an all-solid-state battery. The all-solid state battery may comprise a solid electrolyte, wherein said electrolyte may, e.g., act as both an electrolyte and a separator.

The electrode portion 1210 may be formed by disposing the separator 1213 between the first electrode plate 1211 and the second electrode plate 1212 that are sequentially disposed (e.g., alternatingly stacked). That is, in an embodiment, the first electrode plate 1211, the separator 1213, the second electrode plate 1212, and the separator 1213 may be sequentially stacked (i.e., alternatingly stacked) and formed in the electrode portion 1210. In another embodiment, the electrode portion 1210 may be formed by sequentially disposing the first electrode plate 1211, the separator 1213, and the second electrode plate 1212 and then winding them.

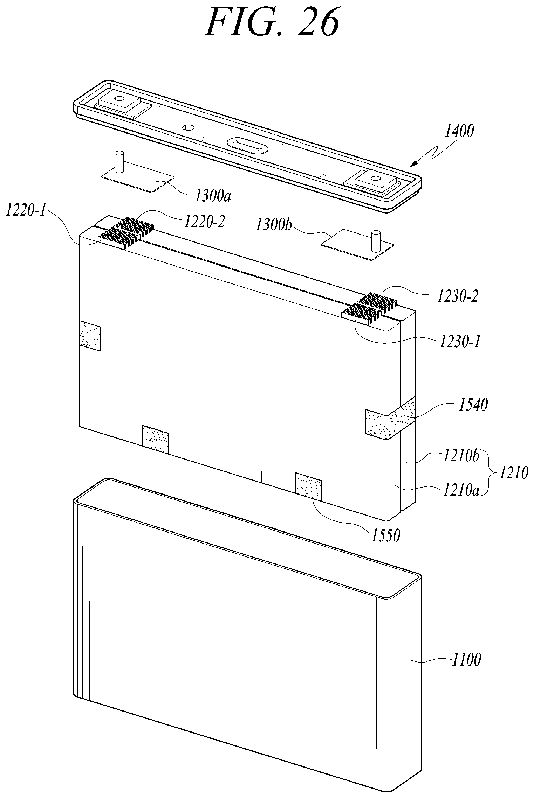

In the present embodiment, the electrode assembly 1200 has been described as including one electrode portion 1210. In another embodiment, the electrode assembly 1200 may include a plurality of electrode portions 1210 (e.g., two, three, four or more electrode portions 1210), for example as detailed below with reference to Fig. 26. The plurality of electrode portions 1210 may be electrically connected.

Each of the electrode tabs 1220 and 1230 may be formed at one side (e.g., one end) of each of the first and second electrode plates 1211 and 1212. No active material may have been applied to the electrode tabs 1220 and 1230. The electrode tabs 1220 and 1230 may be foil tabs, e.g., as illustrated in the example of Figs. 3 and 4A/B. A first foil tab 1220 may be formed in the first electrode plate 1211. A second foil tab 1230 may be formed in the second electrode plate 1212. In an embodiment, the electrode plates 1211 and 1212 and the foil tabs 1220 and 1230 may be integrally formed, for example in a way to form (e.g., leave) the electrode plates 1211 and 1212 and the foil tabs 1220 and 1230 by cutting a predetermined portion of one metal plate (e.g., by using a laser). The plurality of electrode tabs (e.g., foil tabs) 1220 and 1230 may be formed in a direction toward the cap assembly 1400 (e.g., on an upper side of the electrode portion). The electrode tabs 1220 may protrude from the electrode portion 1210 in the direction toward the cap assembly 1400.

When the plurality of first and second electrode plates 1211 and 1212 is stacked, the plurality of first electrode tabs 1220 may overlap at a first location, and the plurality of second electrode tabs1230 may overlap at a second location. That is, the plurality of first electrode tabs1220 having the same polarity may be grouped (e.g., stacked) at the first location, and the plurality of second electrode tabs1230 having the same polarity may be grouped at the second location. The first location and the second location may be spaced apart from each other (on the electrode plate). The plurality of first electrode tabs 1220 and the plurality of second electrode tabs1230 (each of which has been grouped) may be spaced apart from each other, for example in a length direction of the electrode assembly 1200 (which may, e.g., correspond to a long axis or direction of largest extent of the electrode assembly 1200 and/or may be perpendicular to the vertical direction (from the bottom surface to the top surface of the battery) and to a stacking direction of the electrode assembly).

The plurality of first electrode tabs1220 overlapped at the first location may be bonded to each other, e.g., in order to facilitate a movement of a current. The plurality of second electrode tabs1230 overlapped at the second location may be bonded to each other. The electrode tabs 1220, 1230 may for example be bonded through ultrasonic welding or laser welding. The plurality of first electrode tabs 1220 (that has, e.g., been bonded together) and the plurality of second electrode tabs 1230 (that has, e.g., been bonded together) may be connected to the current collection member 1300.

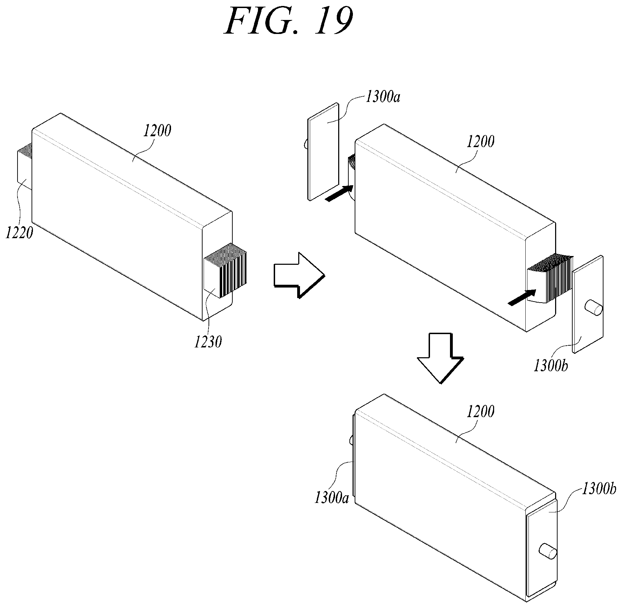

In the present embodiment, the first and second electrode tabs 1220 and 1230 are disposed at one side (e.g., one end) of the electrode portion 1210 (for example a top side facing the cap assembly 1400). In another embodiment, the first foil tab 1220 may be disposed on one side (e.g., a lateral or side face or surface) of the electrode portion 1210, and the second foil tab 1230 may be disposed on the other side of the electrode portion 1210, e.g., as in the example of Fig. 19.

The current collection member 1300 may include a current collection plate 1310 (as an example of a current collection base) and a current collection protrusion 1320. The current collection plate 1310 may be connected (e.g., bonded, for example by welding) to the plurality of electrode tabs1220 and 1230. The current collection plate 1310 may be made of the same material as the plurality of electrode tabs1220 and 1230. The current collection protrusion 1320 may be formed so as to protrude from one surface of the current collection plate 1310 (e.g., an upper surface thereof facing away from the electrode assembly 1200). The current collection protrusion 1320 may be integrally formed with the current collection plate 1310. An insulating material may be disposed under the current collection member 1300. The insulating material may be an insulating plate or an insulating film.

In the present embodiment, the current collection member 1300 may include a first current collection member 1300a and a second current collection member 1300b. The first current collection member 1300a is bonded to the first electrode tabs1220. The second current collection member 1300b is bonded to the second electrode tabs1230. For the bonding of the current collection member 1300 and the electrode tabs1220 and 1230, the current collection member 1300 may be seated (e.g., placed) on the foil tabs 1220 and 1230 (for example after the electrode tabs 1220 and 1230 are bent, e.g., to a same side or opposite sides of the electrode assembly 1200). The electrode tabs 1220 and 1230 may be welded to (e.g., on) the current collection plate 1310. A method, such as ultrasonic welding or laser welding, may be used as the welding.

The cap assembly 1400 is combined with (e.g., covers) the opening of the case 1100, and seals the opening of the case 1100 in which the electrode assembly 1200 is accommodated. As illustrated in FIG. 5, the cap assembly 1400 includes a cap 1410 (in this example embodied and referred to as a cap plate 1410), an electrode terminal 1420, a optional base insulating member 1430, and a fastening member 1440 (in this example embodied and referred to as a rivet part 1440).

The cap plate/cap 1410 has a form of a plate that covers the opening of the case 1100. A through hole 1411 is formed in the cap plate 1410. The cap plate 1410 may have a shape corresponding to a shape of the opening of the case 1100. The cap plate 1410 may be formed of the same material as the case 1100. The cap plate 1410 may be fixed to the case 1100 by a method, such as laser welding.

A vent hole 1414 and/or an electrolyte inlet 1415 may optionally be formed in the cap plate 1410. The vent hole 1414 may be opened (e.g., configured to open) when internal pressure of the case 1100 is greater than a reference value (e.g., a preset pressure). In the present embodiment, the vent hole 1414 has been formed in the cap plate 1410, but the vent hole 1414 may be formed in the case 1100 in another embodiment. The same applies to the electrolyte inlet 1415. An electrolyte may be injected into the case 1100 through the electrolyte inlet 1415.

The electrode terminal 1420 may be seated over the cap plate 1410. The electrode terminal 1420 may include a first electrode terminal 1420a and a second electrode terminal 1420b. In the present embodiment, the electrode terminal 1420 may have a rectangular plate shape, but is not limited thereto and may have various shapes.

A hole 1421, referred to as insertion hole 1421, is formed in the electrode terminal 1420. When the electrode terminal 1420 is seated over the cap plate 1410, the through hole 1411 and the insertion hole 1421 correspond to each other (e.g., so as to overlap each other). To this end, the through hole 1411 and the insertion hole 1421 may have the same central axis. The radius of the through hole 1411 may be greater than the radius of the insertion hole 1421.

The base insulating member 1430 may be disposed between the cap plate 1410 and the electrode assembly 1200. The base insulating member 1430 may have a plate shape in which the base insulating member 1430 has the same length and width as the cap plate 1410. The base insulating member 1430 may insulate the cap plate 1410 and the electrode assembly 1200, the current collection plate 1310, and the fastening member/rivet part 1440. A hole 1431, referred to as base hole 1431, of the base insulating member 1430 may be formed at a location corresponding to the through hole 1411 of the cap plate 1410. The size of the base hole 1431 may be greater than that of the through hole 1411. Furthermore, in some examples, an exhaust hole of the base insulating member 1430 may be formed at a location corresponding to the vent hole 1414 of the cap plate 1410. Additionally or alternatively, a guide hole of the base insulating member 1430 may be formed at a location corresponding to the electrolyte inlet 1415 in some examples.

The fastening member 1440 includes a body portion (also referred to as body part) 1441, a first projecting portion 1442 at a first end (first side) of the body portion 1441 and a second projecting portion 1443 at a second end (second side) of the body portion 1441 opposite to the first end. The first and second projecting portions 1441, 1442 project laterally (e.g., radially) outward from the body portion 1441 at the respective end of the body portion 1441.

A direction from the first end to the second end of the hollow body portion 1441 (e.g., along the central axis of the body portion 1441) may be referred to as a longitudinal direction of the body portion 1441 (or of the fastening member 1440). A direction at an angle (i.e., not parallel) to the longitudinal direction may be referred to as a lateral direction of the body portion 1441 (or of the fastening member 1440) and, in the case said direction is perpendicular to the longitudinal direction, as a radial direction of the body portion 1441 (or fastening member 1440). The longitudinal direction may be perpendicular to (the plane of) the cap plate 1410 (e.g., parallel to the vertical direction), whereas the radial direction may be parallel to (the plane of) the cap plate 1410 (e.g., a horizontal direction). The central axis of the body portion 1441 may be aligned with (e.g., coincide) with the central axis of one or both of the through hole 1411 and the insertion hole 1421.

In the examples of FIG. 1 to 10, the fastening member 1440 is embodied as a rivet part 1440, which includes the body part (body portion) 1441, a first bent part 1442 (as the first projecting portion 1442), and a second bent part 1443 (as the second projecting portion 1443).

In other examples, the fastening member 1440 may be embodied differently, e.g., as a (for example pre-formed) snapping pin, which may for example be configured to be inserted into the through hole 1411 and the insertion hole 1421 (e.g., by temporarily (e.g., elastically) deforming and/or bending one or both of the body portion 1441 and the projecting portion that is inserted into the holes) and to then snap into place (for example by the body portion and/or the respective projecting portion returning to their initial state, e.g., shape and/or position). Irrespective of how the fastening member 1440 is embodied, the following description (both with regard to the examples of FIG. 1 to 10 as well as all other examples from the figures) may likewise apply, i.e., the fastening member 1440 may have any feature or combination of features described in the following even when not embodied as a rivet part.

The body part 1441 has a hollow structure. The current collection protrusion 1320 of the current collection member 1300 is inserted into the hollow body part 1441. The body part 1441 is inserted into the through hole 1411 (in the cap plate 1410) and the insertion hole 1421 (in the electrode terminal 1420).

The first bent part 1442 is bent toward the electrode terminal 1420 on one side (referred to as the first side or end) of the body part 1441. A recess (also referred to as seated groove) 1422 may be formed in the circumference of the insertion hole 1421 of the electrode terminal 1420. The first bent part 1442 may be seated in the seated groove 1422. The first bent part 1442 seated in the seated groove 1422 may be welded to the electrode terminal 1420 along the outer circumference thereof.

In the present embodiment, the depth of the seated groove 1422 is greater than the thickness of the first bent part 1442 in the vertical direction. Accordingly, the first bent part 1442 may be seated to have a height lower than the top of the electrode terminal 1420 (e.g., such that the rivet part 1440/first bent part 1442 is recessed from the top of the electrode terminal 1420 facing away from the cap plate 1410). In the present embodiment, the seated groove 1422 is formed horizontally outward from the center of the insertion hole 1421 to beyond the through hole 1411 (e.g., to extend laterally outward beyond an edge of the through hole 1411 as seen along the longitudinal direction of the rivet part 1440). Accordingly, the first bent part 1442 also extends more outward horizontally than the through hole 1411.

The second bent part 1443 is bent toward the base insulating member 1430 on the other side of the body part 1441. Accordingly, the second bent part 1443 may come into contact with the base insulating member 1430 on a lower part (e.g., bottom surface) of the base insulating member 1430.

The rivet part 1440 may be inserted into the through hole 1411 and the insertion hole 1421 in the state in which the second bent part 1443 has been formed on the other side (second side) of the body part 1441 (but, e.g., in a state in which the first bent part 1442 has not been formed yet or has not yet been formed completely). Thereafter, as illustrated in FIG. 8A and 8B, one side (first side) of the main body part 1441 is pressurized (e.g., a pressure is applied to the first side of the body part 1441) and bent (e.g., deformed or curved) to form the first bent part 1442. If the first bent part 1442 is pressurized and bent as described above, it is preferred that the second bent part 1443 is formed to be vertically thicker than the first bent part 1442 (e.g., thicker along the longitudinal direction of the rivet part 1440). Furthermore, a maximum length of the second bent part 1443 in the horizontal direction (e.g., the radial direction of the rivet part 1440) may be longer than a maximum length of the first bent part 1442 in the horizontal direction (e.g., the second bent part 1443 may project further laterally outward than the first bent part 1442).

As illustrated in FIG. 9A, 9B and 9C, the rivet part 1440 may have various shapes. The main body part 1441 of the rivet part 1440 may have various shapes, such as a cylinder and a square column (e.g., as a post with a square (or rectangular or other polygonal) cross-section). In this case, it is preferred that the cross section of each of the through hole 1411 and the insertion hole 1421 has the same shape as that of the main body part 1441. Shapes of the first bent part 1442 and the second bent part 1443 may be changed depending on a shape of the main body part 1441. The second bent part 1443 may be divided into a plurality of portions (segments) in order to facilitate bending. The first bent part 1442 may also be divided into a plurality of portions (segments), but it is preferred that the first bent part 1442 be integrally formed for sealing purposes.

After the rivet part 1440 has the first bent part 1442 formed in and mounted on the cap assembly 1400, the first bent part 1442 and the second bent part 1443 may be pressurized (e.g., exert a pressure) in the direction of the cap plate 1410 (thereby for example pressing together the cap plate 1410 and the electrode terminal 1420 as well as other components arranged between the first and second bent parts 1442, 1443). Accordingly, the airtightness of the cap assembly 1400 is increased because components that constitute the cap assembly 1400 are closely combined.

In some examples, the cap assembly 1400 may further include a terminal insulating member 1450. The terminal insulating member 1450 may be disposed between the electrode terminal 1420 and the cap plate 1410. The terminal insulating member 1450 may insulate the cap plate 1410 and the electrode terminal 1420. The terminal insulating member 1450 may have a shape in which the terminal insulating member 1450 surrounds all of the sides of the electrode terminal 1420 in the height direction thereof, and/or may have a shape in which the terminal insulating member 1450 surrounds only some of the sides of the electrode terminal 1420 in the height direction depending on situations. A hole (referred to as terminal insulating hole) 1451 of the terminal insulating member 1450 may be formed at a location corresponding to the through hole 1411 of the cap plate 1410. The size of the terminal insulating hole 1451 may be the same as or smaller than the size of the through hole 1411.

In the present embodiment, a terminal groove (also referred to as terminal recess) 1452 may be formed in a top surface of the terminal insulating member 1450. The terminal groove 1452 may be formed around the terminal insulating hole 1451. A part of the electrode terminal 1420 may be accommodated in the terminal groove 1452. To this end, a terminal protrusion part (also referred to as terminal protrusion) 1423 that protrudes in the direction of the terminal insulating member 1450 may be formed in the electrode terminal 1420 (e.g., on a bottom thereof facing the cap plate 1410). It is preferred that the terminal protrusion part 1423 have the same size as the terminal groove 1452. A method of the terminal protrusion part 1423 being accommodated in the terminal groove 1452 stably places the electrode terminal 1420 and increases the easiness of an assembly.

An insulating protrusion part (also referred to as insulating protrusion) 1453 that protrudes in the direction of the cap plate 1410 may be formed in the terminal insulating member 1450 (e.g., on a bottom thereof facing the cap plate 1410). An accommodation groove (also referred to as accommodation recess) 1412 may be formed in a top surface of the cap plate 1410. The insulating protrusion part 1453 may be accommodated in the accommodation groove 1412. In the present embodiment, the size of the accommodation groove 1412 may be greater than the size of the insulating protrusion part 1453. Accordingly, a space S1 isolated in the horizontal direction is formed between the cap plate 1410 and the insulating protrusion part 1453 (e.g., the terminal insulating member 1450 and in particular the insulating protrusion may be separated from a sidewall of the accommodation groove/recess by a gap S1). As the isolated space S1 is formed as described above, the assembly of the cap assembly 1400 can be facilitated.

The cap assembly 1400 may further include a gasket 1460. The gasket 1460 may be disposed between the cap plate 1410 and the rivet part 1440. The gasket 1460 may prevent an electrolyte or a gas within the case 1100 from leaking to the outside and/or prevent moisture or air from penetrating the case 1100 from the outside.

In the present embodiment, the gasket 1460 includes an insertion part (also referred to as insertion portion) 1461 and a support part (also referred to as support portion) 1462. The insertion part 1461 has a hollow structure. The insertion part 1461 is inserted into the through hole 1411 and is disposed between the cap plate 1410 and the body part 1441 of the rivet part 1440. The hollow of the insertion part 1461 may have the same central axis as the through hole 1411 and the hollow of the body part 1441.

The support part 1462 may have a flat plate shape. The support part 1462 may be bent at one end (e.g., the bottom or inner end) of the insertion part 1461. The support part 1462 may be disposed between the bottom of the cap plate 1410 and the second bent part 1443 of the rivet part 1440 (e.g., be in contact with a bottom surface of the cap plate 1410 and a top surface of the second bent part 1443). The support part 1462 is spaced apart from the base insulating member 1430 in the horizontal direction, and is disposed in the state in which an isolated space S2 has been formed (put differently, the support portion of the gasket and the base insulating member may be separated from each other by a gap S2). As the support part 1462 and the base insulating member 1430 are spaced apart from each other as described above, the assembly of the cap assembly 1400 can be facilitated.

In the present embodiment, the second bent part 1443 of the rivet part 1440 may pass through the support part 1462 of the gasket 1460 and may extend until the second bent part 1443 comes into contact with the base insulating member 1430 (e.g., a bottom surface thereof). In this case, airtightness can be maintained because the second bent part 1443 may be closely attached to the base insulating member 1430 and the support part 1462, in particular when the thickness of the support part 1462 (e.g., as measured perpendicular to the bottom surface of the cap plate 1410) is the same as that of the base insulating member 1430.

In the present embodiment, the radius of the insertion hole 1421 is smaller than the radius of the through hole 1411. Accordingly, a part of the bottom of the electrode terminal 1420 around the insertion hole 1421 may be exposed by the through hole 1411. The top of the insertion part 1461 of the gasket 1460 may come into contact with the bottom of the electrode terminal 1420, which is exposed by the through hole 1411 of the electrode terminal 1420. Accordingly, the sealing effect of the gasket 1460 may be increased.

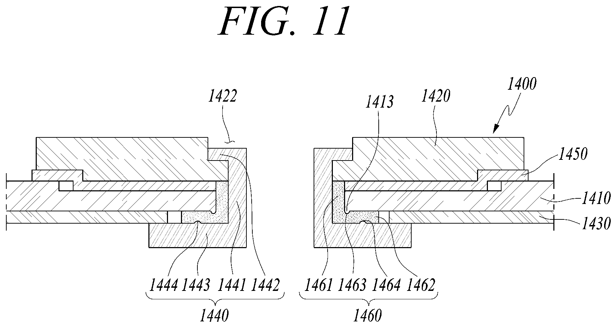

FIG. 11 is a cross-sectional view illustrating a cap assembly according to another embodiment of the present disclosure.

As illustrated in FIG. 11, the cap assembly 1400 according to another embodiment of the present disclosure includes the cap plate 1410, the electrode terminal 1420, the base insulating member 1430, the rivet part 1440 (as an example of a fastening member), the terminal insulating member 1450, and the gasket 1460. In the present embodiment, a detailed description of the same contents as those described with reference to FIGS. 1 to 10 is omitted (e.g., unless mentioned otherwise, the components of the cap assembly 1400 may be embodied as described above). The cap assembly 1400 of FIG. 11 may for example likewise be used in the secondary battery 1000 described above.

A groove 1463 of the gasket 1460 may be formed at a bent portion (e.g., interior edge) at which the insertion part 1461 and the support part 1462 come into contact with each other. The groove 1463 may be continuously formed along the outer circumference of the insertion part 1461 (e.g., so as to fully surround the insertion part 1461). A hole protrusion part 1413 of the cap plate 1410 may be formed at the bottom (e.g., a bottom rim) of the through hole 1411. The hole protrusion part 1413 is inserted into the groove 1463. A shape of the hole protrusion part 1413 may be formed to correspond to a shape of the groove 1463. When the hole protrusion part 1413 is inserted into the groove 1463, the gasket 1460 and the cap plate 1410 may be closely combined. Accordingly, sealing power of the gasket 1460 may be improved.

Additionally or alternatively, in the present embodiment, a rivet protrusion 1444 of the second bent part 1443 of the rivet part 1440 (as an example of a fastening protrusion of a fastening member) may be formed in a direction toward the cap plate 1410 (e.g., protruding upward from an upper surface of the second bent part 1443). The number of rivet protrusions 1444 may be plural. A fastening groove 1464 may be formed in the gasket 1460 in accordance with the rivet protrusion 1444. The rivet protrusion 1444 is inserted into the fastening groove 1464. In another embodiment, the fastening groove 1464 may be formed in at least one of the base insulating member 1430 or the gasket 1460. The fastening groove 1464 is formed to have the same number as the rivet protrusion 1444 (e.g., the number of fastening grooves may be equal to the number of rivet protrusions). The rivet part 1440 may be stably fixed through the combination of the rivet protrusion 1440 and the fastening groove 1464.

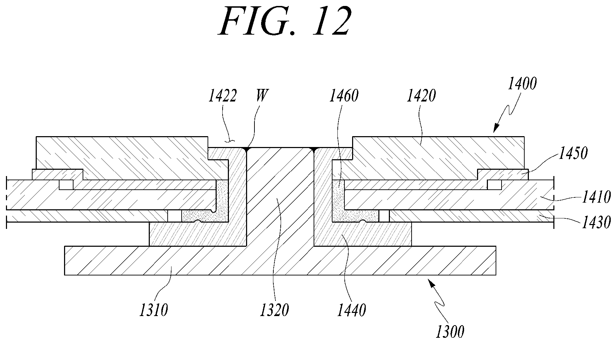

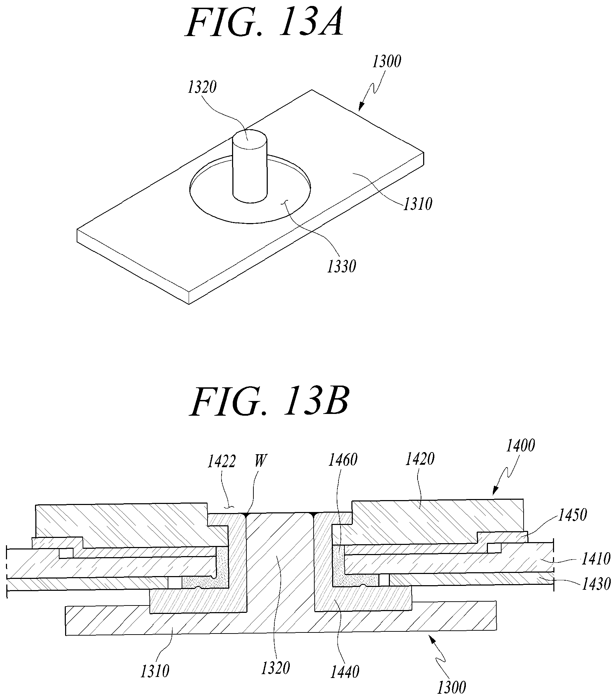

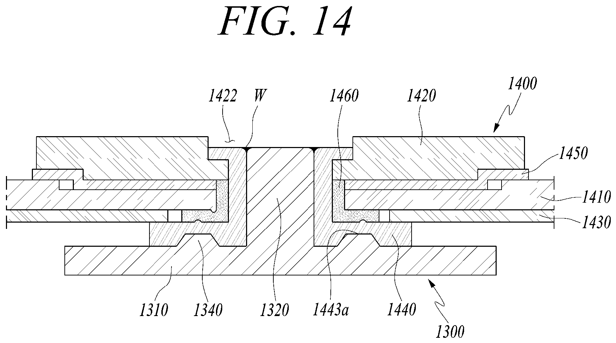

FIG. 12 is a diagram illustrating the current collection member inserted into the cap assembly according to an embodiment of the present disclosure such as the cap assembly of FIGS. 1 to 10 or the cap assembly of FIG. 11. FIG. 13A and 13B are a diagram illustrating the second bent part of the rivet part (as an example for a second projection portion of a fastening member) seated in the current collection plate in which a first fixing groove (which may also be referred to as fixing recess and is an example of a fixing structure) has been formed according to another embodiment of the present disclosure. FIG. 14 is a diagram illustrating the second bent part of the rivet part (as an example for a second projection portion of a fastening member) combined with the current collection plate according to another embodiment of the present disclosure.

A detailed description of the same contents as those described with reference to FIGS. 1 to 11 is again omitted (e.g., unless mentioned otherwise, the components of the cap assemblies of FIG. 12 to 14 may be embodied as described above). The cap assemblies 1400 of FIG. 12 to 14 may for example likewise be used in the secondary battery 1000 described above.

As illustrated in FIG. 12, the current collection member 1300 is combined with the cap assembly 1400 according to an embodiment of the present disclosure. The combination of the cap assembly 1400 and the current collection member 1300 is performed as the current collection protrusion 1320 is inserted into the hollow formed in the body part 1441 of the rivet part 1440. To this end, the size of the current collection protrusion 1320 may be the same as or slightly greater than the size of the hollow of the body part 1441 (e.g., so as to form a press fit with the body part 1441). When the cap assembly 1400 and the current collection member 1300 are combined, the current collection plate 1310 may be closely attached to the second bent part 1443 of the rivet part 1440.

After the cap assembly 1400 and the current collection member 1300 are combined, the current collection protrusion 1320 and the first bent part 1442 of the rivet part 1440 may be welded together (or otherwise attached or bonded with each other). More specifically, the current collection protrusion 1320 and the first bent part 1442 of the rivet part 1440 may be welded together along the outer circumference of the top of the current collection protrusion 1320 by using a method, such as ultrasonic welding or laser welding. For clean and continuous welding, the outer circumference of the current collection protrusion 1320 and the inside of the first bent part 1442 may be subjected to round treatment or deodorization treatment.

When the current collection protrusion 1320 is inserted into the hollow formed in the body part 1441 of the rivet part 1440, the top of the current collection protrusion 1320 may have the same height as (e.g., be flush with) the first bent part 1442 of the rivet part 1440. The top of the current collection protrusion 1320 may have a lower height than (e.g., be recessed from) the top of the electrode terminal 1420, e.g., because the first bent part 1442 may have a lower height than the top of the electrode terminal 1420. Accordingly, a welded welding part W (e.g., between the current collection protrusion 1320 and the first bent part 1442)may not protrude outside of the electrode terminal 1420.

Put differently, in the example of FIG. 12, the fastening member/rivet part 1440 may not protrude beyond an end (e.g., a top) of the current collection protrusion 1320 in the (longitudinal) direction from the second end (inner end) to the first end (outer end) of the body portion 1441. In other examples, however, the fastening member/rivet part 1440 may protrude beyond an end of the current collection protrusion 1320 in the direction from the second end (inner end) to the first end (outer end) of the body portion 1441, for example such that a top (e.g., an upper surface) of the fastening member/rivet part 1440 (which may, e.g., be formed by one or both of the body portion 1441 and the first projecting portion/first bent part 1442) facing away from the cap plate 1410/facing away from the battery case 1100 is recessed from or flush with a top (e.g., an upper surface) of the electrode terminal 1420 facing away from the cap plate 1410/facing away from the battery case 1100.

The current collection plate 1310 of the current collection member 1300 may be bonded to the foil tabs 1220 and 1230 of the electrode assembly 1200, e.g., by welding. The current collection protrusion 1320 that is formed by protruding from one surface of the current collection plate 1310 is connected to the electrode terminal 1420 through the rivet part 1440. Accordingly, the electrode assembly 1200 is electrically connected to the electrode terminal 1420 (through the current collection member 1300 and the fastening member/rivet part 1440).

As illustrated in FIG. 13A and 13B, in the current collection member 1300 according to another embodiment of the present disclosure, a first fixing groove 1330 (which may also be referred to as first fixing recess and is an example of a fixing structure) is formed in a top surface of the current collection plate 1310. The first fixing groove 1330 is formed in the circumference of the current collection protrusion 1320 centering around the current collection protrusion 1320 (e.g., so as to fully surround the current collection protrusion 1320 as illustrated in Fig. 13A). When the cap assembly 1400 and the current collection member 1300 are combined, the second bent part 1443 (e.g., the bottom thereof) of the rivet part 1440 may be accommodated and seated in the first fixing groove 1330. Accordingly, the current collection member 1300 and the rivet part 1440 may be stably combined.

As illustrated in FIG. 14, in the current collection member 1300 according to still another embodiment of the present disclosure, a fixing protrusion 1340 (as another example of a fixing structure) is formed in the top surface of the current collection plate 1310. A second fixing groove 1443a (as an example of a corresponding counterpart for a fixing structure) into which the fixing protrusion 1340 is inserted is formed in the second bent part 1443 of the rivet part 1440. The fixing protrusion 1340 and the second fixing groove 1443a may extend along the circumference (e.g., around the entire circumference) of the body part 1441. As the fixing protrusion 1340 is inserted into the second fixing groove1443a, the current collection member 1300 and the rivet part 1440 may be stably combined.

When the current collection member 1300 and the rivet part 1440 are stably combined in the same method as that described with reference to FIGS. 13 and 14, the concentricities of the current collection protrusion 1340 and the hollow of the main body part 1441 of the rivet part 1440 may be easily aligned. Furthermore, the top of the current collection protrusion 1340 and the height of the first bent part 1442 of the rivet part 1440 may be easily aligned. Accordingly, the assembly of the cap assembly 1400 may be improved.

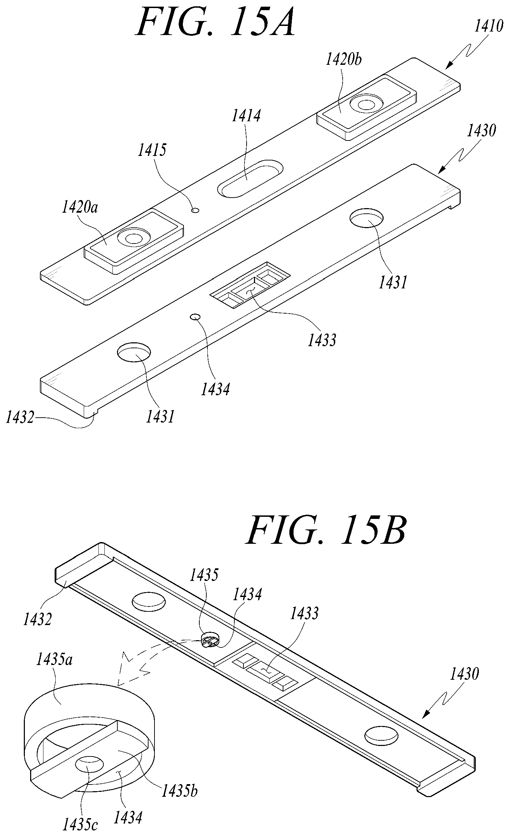

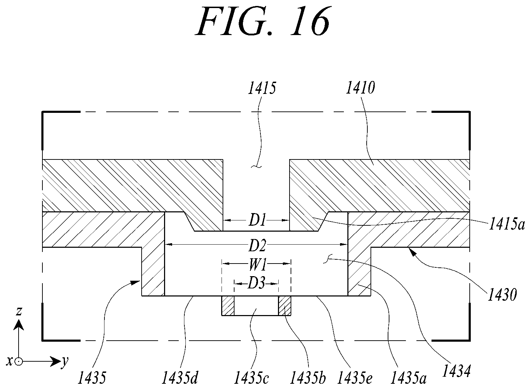

FIG. 15A is a diagram illustrating the cap plate and the base insulating member according to an embodiment of the present disclosure. FIG. 15B is a diagram illustrating the bottom of the base insulating member. FIG. 16 is a cross-sectional view illustrating the electrolyte inlet of the cap plate and the guide hole of the base insulating member according to an embodiment of the present disclosure. The cap and the base insulating member of FIGS. 15 and 16 may for example be used as the cap plate and the base insulating member, respectively, of the secondary battery 1000 described above.

As illustrated in FIGS. 15 and 16, the cap plate 1410 (as an example of a cap) and the base insulating member 1430 may each have a quadrangle plate shape. Two support protrusions 1432 that protrude in a direction opposite to the location of the cap plate 1410 (e.g., downwards/towards the electrode assembly of the secondary battery) may be formed at both ends (e.g., both lateral/horizontal ends) of the base insulating member 1430. The vent hole 1414 and the electrolyte inlet 1415 may be formed in the cap plate 1410. An exhaust hole 1433 and a guide hole 1434 may be formed in the base insulating member 1430.

The exhaust hole 1433 may be disposed under the vent hole 1414 (e.g., so as to overlap therewith). The exhaust hole 1433 may include a plurality of exhaust openings. If the exhaust hole 1433 is formed in the base insulating member 1430 as described above, when pressure within the case 1100 is increased, the vent hole 1414 may be broken at preset reference pressure, and thus a gas within the case 1100 can be easily discharged to the outside.

The guide hole 1434 may be disposed under the electrolyte inlet 1415 (e.g., so as to overlap therewith).

An injection protrusion 1415a (e.g., a cylindrical injection protrusion) may be formed at the bottom of the electrolyte inlet 1415 (e.g., protruding from the bottom of the electrolyte inlet 1415 towards the base insulating member 1430). The injection protrusion 1415a may for example be inserted into an upper part of the guide hole 1434.

A guide part 1435 may be formed in the guide hole 1434 in a direction toward the electrode assembly. The guide part 1435 may include a guide rim 1435a (e.g., a cylindrical guide rim 1435a as in the example of FIG. 15B) that surrounds a lower part of the guide hole 1434 (e.g., protrudes from a lower part of the guide hole 1434).

In some examples, the guide part 1435 may further include a support 1435b (which may, e.g., be embodied as a bridge or stay as illustrated in FIG. 15B) that is disposed in the lower part of the guide hole 1434 (e.g., at a bottom end of the guide part 1435 or the guide rim 1435a). The support 1435b may partially block the guide hole 1434. In some examples, the guide part 1435 may not include the guide rim 1435a and the support 1435b may for example be disposed at a bottom surface of the base insulating member 1430.

The guide part 1435 may optionally further include an internal hole 1435c that is formed in the support 1435b (and that may move, e.g., allow passage of, a fluid).

The guide rim 1435a may have a circular ring form. The support 1435b may have a straight rod shape. The support 1435b may be arranged at (e.g., fixed to) the bottom of the guide rim 1435a The support 1435 may be connected in the direction of the diameter of the guide hole 1434 (e.g., extend across a diameter of the guide hole 1434 as illustrated in FIG. 15B). The internal hole 1435c may be disposed at the center of the support 1435b in the length direction thereof (e.g., aligned with a central axis of the guide hole 1434) The internal hole 1435c may be formed to face the electrolyte inlet 1415. The diameter D3 of the internal hole 1435c may be smaller than the diameter D1 of the electrolyte inlet 1415. The internal hole 1435c may be disposed within a lower area corresponding to the electrolyte inlet 1415.

The diameter D2 of the guide hole 1434 may be greater than the diameter D1 of the electrolyte inlet 1415. The width W1 of the support 1435b (e.g., measured perpendicular to a direction in which the support 1435b extends across the a diameter of the guide hole 1434) may be 0.2 to 0.6 times the diameter D2 of the guide hole 1434. Additionally or alternatively, the width W1 of the support 1435b may be greater than the diameter D1 of the electrolyte inlet 1415. The width W1 may for example be 1.1 to 1.5 times the diameter D1 of the electrolyte inlet 1415.

When the guide part 1435 is formed in the base insulating member 1430, the electrolyte inlet 1415 may be prevented from being clogged and/or an electrolyte may be easily injected by the lower structure. In particular, an electrolyte that moves into the case 1100 through the internal hole 1435c may be prevented from flowing backward, for example because the internal hole 1435c is disposed directly below the electrolyte inlet 1415. Furthermore, if the internal hole 1435c is clogged or a large amount of an electrolyte is supplied, the electrolyte may be injected into the case 1100 through a first opening 1435d and a second opening 1435e formed on both sides of the support 1435b.

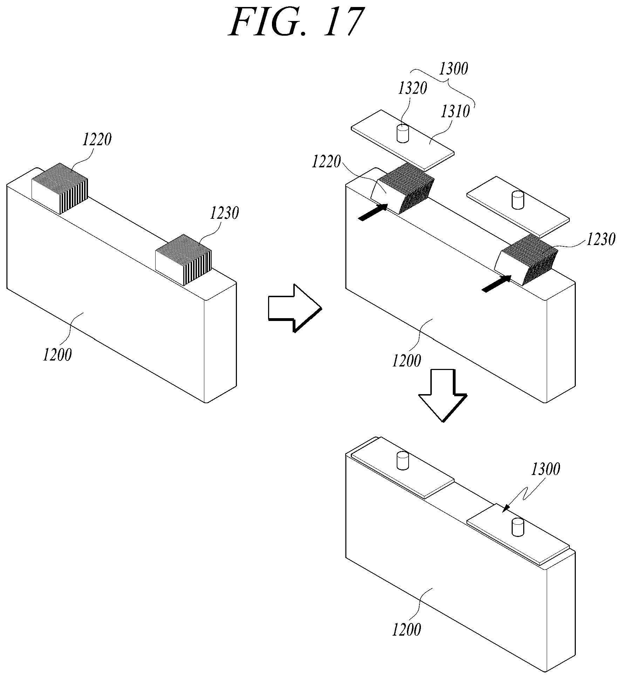

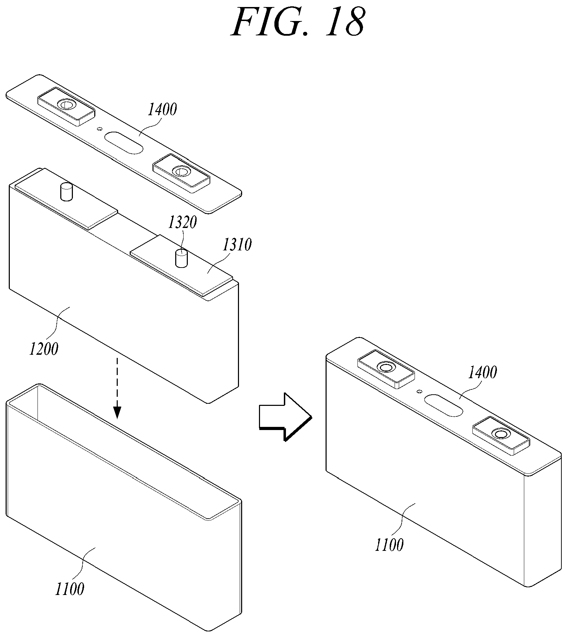

FIG. 17 is a diagram conceptually illustrating a process of the foil tabs and the current collection member being combined in the secondary battery according to an embodiment of the present disclosure. FIG. 18 is a diagram conceptually illustrating a process of the cap assembly and the current collection member being combined in the secondary battery according to an embodiment of the present disclosure. The process(es) of FIGS. 17 and/or 18 may for example be used for assembling a secondary battery according to the present disclosure such as the secondary battery 1000 described above.

As illustrated in FIGS. 17 and 18, in the secondary battery according to an embodiment of the present disclosure, the foil tabs 1220 and 1230 of the electrode assembly 1200 and the current collection member 1300 are bonded (e.g., welded) together. To this end, the first foil tabs 1220 may be bonded (e.g., welded or pre-welded) together. The second foil tabs 1230 may be bonded (e.g., welded or pre-welded) together.

In the state in which the foil tabs 1220, 1230 that are bonded/welded together have been bent by applying a force to the foil tabs in the bending direction thereof (e.g., to one side of the electrode assembly 1200 or to opposite sides of the electrode assembly 1200), the current collection member 1300 may be disposed over (e.g., place on) the foil tabs 1220, 1230. The foil tabs 1220, 1230 and the current collection plate 1310 may be bonded together, e.g., by welding the foil tabs 1220, 1230 and the current collection plate 1310 together over the current collection plate 1310 of the current collection member 1300.

When the foil tabs 1220, 1230 and the current collection member 1300 are bonded/welded together, the electrode assembly 1200 may be accommodated in the case 1100. An opening is formed in one surface of the case 1100. The current collection protrusion 1310 is exposed to the outside through the opening. The cap assembly 1400 is combined with the case 1100 (e.g., so as to cover the opening). The cap assembly 1400 is combined with the case 1100 so that the current collection protrusion 1310 of the current collection plate 1300 is inserted into the hollow of the rivet part/fastening member.

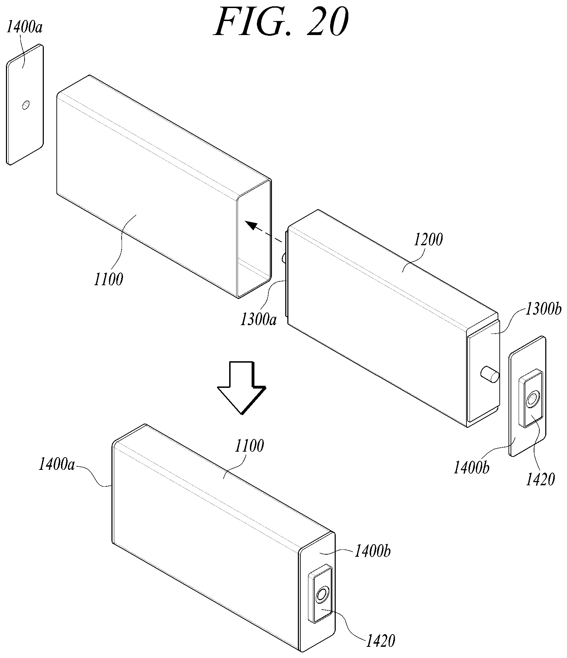

FIG. 19 is a diagram conceptually illustrating a process of the current collection member and the foil tabs being combined when the foil tabs are formed in both directions (e.g., on both side/opposite sides) of the electrode assembly in a secondary battery according to another embodiment of the present disclosure. FIG. 20 is a diagram conceptually illustrating a process of the cap assembly being combined with the current collection member in the secondary battery according to another embodiment of the present disclosure. The process(es) of FIGS. 19 and/or 20 may for example be used for assembling a secondary battery according to the present disclosure such as the secondary battery 1000 described above.

As illustrated in FIGS. 19 and 20, in the secondary battery according to another embodiment of the present disclosure, the first foil tab 1220 and the second foil tab 1230 are disposed on different sides of the electrode assembly 1200. That is, the first foil tab 1220 is formed in a first direction (e.g., on a first side of the electrode assembly 1200). The second foil tab 1230 is formed in a second direction (e.g., on a second side of the electrode assembly 1200 opposite to the first side). A first current collection member 1300a is disposed on the first foil tab 1220. A second current collection member 1300b is disposed on the second foil tab 1230. Accordingly, the current collection plate 1310 (e.g., a respective current collection plate 1310) is disposed on the foil tabs 1220, 1230. The foil tabs 1220, 1230 and the current collection plate 1310 may be bonded, e.g., welded, together.

When the foil tabs 1220 and 1230 and the current collection member 1300 are bonded/welded together, the electrode assembly 1200 may be accommodated in the case 1100. A first opening and a second opening may be formed in one surface and the other surface of the case 1100, respectively. The current collection protrusion 1310 of the current collection member 1300 that has been bonded to the foil tabs 1220 and 1230 may be exposed to the outside through the openings, respectively. As the current collection protrusion 1310 of the current collection plate 1300 is inserted into the hollow of the rivet part, the cap assembly 1400 is combined with the opening of the case 1100. A first cap assembly 1400a is combined with the first opening (e.g., so as to cover the first opening). A second cap assembly 1400b is combined with the second opening (e.g., so as to cover the second opening).

In examples as in FIGS. 19 and 20, in which two openings are formed in the case 1100 on different sides (and covered by a respective cap assembly), either one of the sides may be referred to as the upper or top side within the meaning as defined above. Other spatially relative terms may be used accordingly.

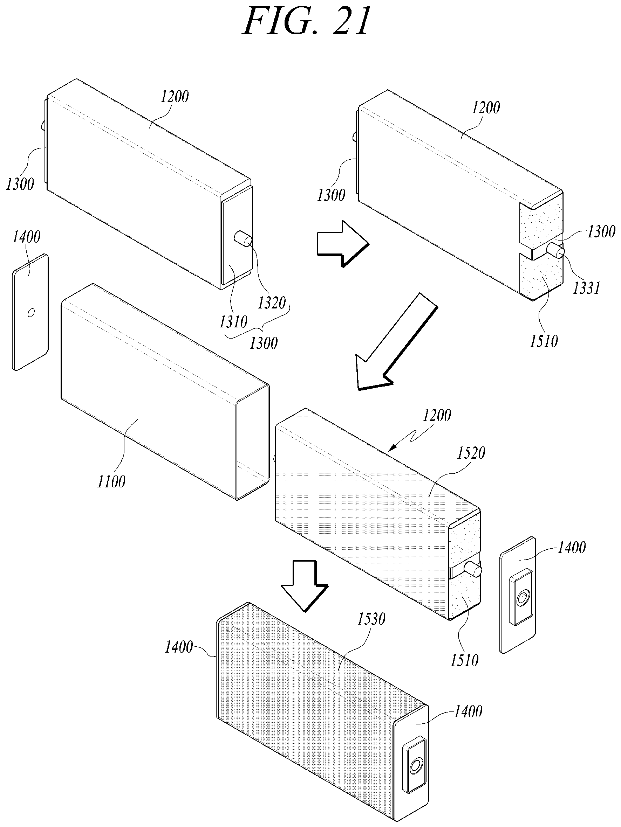

FIG. 21 is a diagram conceptually illustrating that an insulating tape is attached in the state in which the electrode assembly and the current collection plate have been combined according to an embodiment of the present disclosure. The process of FIG. 21 may for example be used for assembling a secondary battery according to the present disclosure such as the secondary battery 1000 described above.

As illustrated in FIG. 21, in the secondary battery according to an embodiment of the present disclosure, the two current collection members 1300 may be bonded to the foil tabs on different sides of the electrode assembly 1200. After the electrode assembly 1200 and the current collection member 1300 are bonded, a first insulating tape 1510 may be attached to the current collection member 1300. The first insulating tape 1510 covers the current collection plate 1310 on both sides of the current collection protrusion 1320. The first insulating tape 1510 may be extended up to the electrode assembly 1200 and attached thereto. The current collection member 1300 may be stably fixed through the first insulating tape 1300, thus preventing a short-circuit between the foil tab and the cap assembly 1400.

After the first insulating tape 1510 is attached, the entire surface that belongs to an external surface of the electrode assembly 1200 and in which a foil tab has not been formed is surrounded by the second insulating tape 1520 (e.g., all lateral/side face or surface of the electrode assembly 1200 may be covered by the second insulating tape 1520). Thereafter, the electrode assembly 1200 may be inserted into the case 1100. The case 1100 and the electrode assembly 1200 may be insulated by the second insulating tape 1520.

After the electrode assembly 1200 is inserted into the case 1100, the cap assembly 1400 may be combined with the opening of the case 1100 (e.g., so as to cover the opening). An external surface of the case 1100 is surrounded by the third insulating tape 1530, thereby completing the fabrication of the secondary battery.

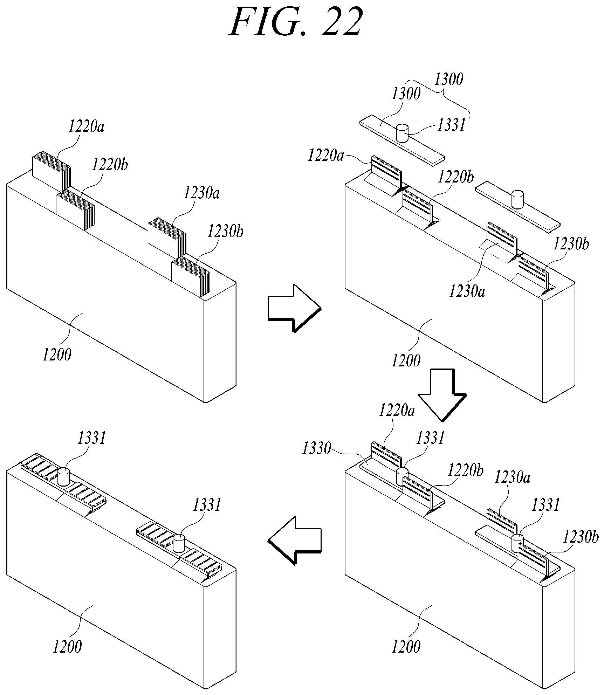

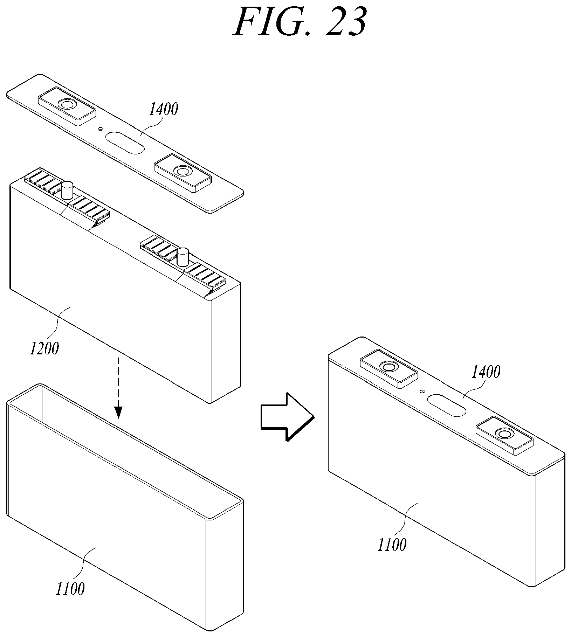

FIG. 22 is a diagram conceptually illustrating that two foil tabs having the same polarity are bonded to the current collection member according to another embodiment of the present disclosure. FIG. 23 is a diagram conceptually illustrating a process of the cap assembly being combined with the current collection member in the secondary battery according to another embodiment of the present disclosure. The process(es) of FIGS. 22 and/or 23 may for example be used for assembling a secondary battery according to the present disclosure such as the secondary battery 1000 described above.

As illustrated in FIGS. 22 and 23, the electrode assembly 1200 of the secondary battery according to an embodiment of the present disclosure includes a plurality of (1-1)-th foil tabs 1220a, a plurality of (1-2)-th foil tabs 1220b, a plurality of (2-1)-th foil tabs 1230a, and a plurality of (2-2)-th foil tabs 1230b. The plurality of (1-1)-th foil tabs 1220a may be aligned and overlapped. The plurality of (1-2)-th foil tabs 1220b may be aligned and overlapped. The plurality of (2-1)-th foil tabs 1230a may be aligned and overlapped. The plurality of (2-2)-th foil tabs 1230b may be aligned and overlapped. The plurality of foil tabs 1220a to 1230b may be disposed in the width direction and length direction of the electrode assembly 1200 (e.g., in a horizontal plane perpendicular to the vertical direction) so that each of the plurality of foil tabs 1220a to 1230b does not overlap (e.g., in both of the width and length directions). Each of the plurality of foil tabs 1220a to 1230b that overlap at respective locations may be bonded, e.g., welded or pre-welded, together.

The current collection member 1300 is disposed between the (1-1)-th foil tabs 1220a and the (1-2)-th foil tabs 1220b. A (first) current collection insulation member may be disposed between the current collection member 1300 and the electrode assembly 1200. The (1-1)-th foil tabs 1220a may be bent upward from the current collection plate 1310 on one side of the current collection protrusion 1320. The (1-2)-th foil tabs 1220b may be bent upward from the current collection plate 1310 on the other side of the current collection protrusion 1320. A (second) current collection member 1300 may also disposed between the (2-1)-th foil tabs 1230a and the (2-2)-th foil tabs 1230b. The (2-1)-th foil tabs 1230a may be bent upward from the current collection plate 1310 on one side of the current collection protrusion 1320. The (2-2)-th foil tabs 1230b may be bent upward from the current collection plate 1310 on the other side of the current collection protrusion 1320.

When the plurality of foil tabs 1220a to 1230b is bent upward from the current collection plate 1310, the plurality of foil tabs 1220a to 1230b and the current collection plate 1310 may be bonded, e.g., by welding the plurality of foil tabs 1220a to 1230b and the current collection plate 1310 together over the plurality of foil tabs 1220a to 1230b. A method, such as ultrasonic welding or laser welding, may be used as the welding.

When the plurality of foil tabs 1220a to 1230b and the current collection member 1300 are bonded, the electrode assembly 1200 may be accommodated in the case 1100. An opening may be formed in one surface of the case 1100. The current collection protrusion 1310 may be exposed to the outside through the opening. The cap assembly 1400 may be combined with the case 1100 (e.g., so as to cover the opening). The current collection protrusion 1310 of the current collection plate 1300 may be inserted into the hollow of the rivet part.

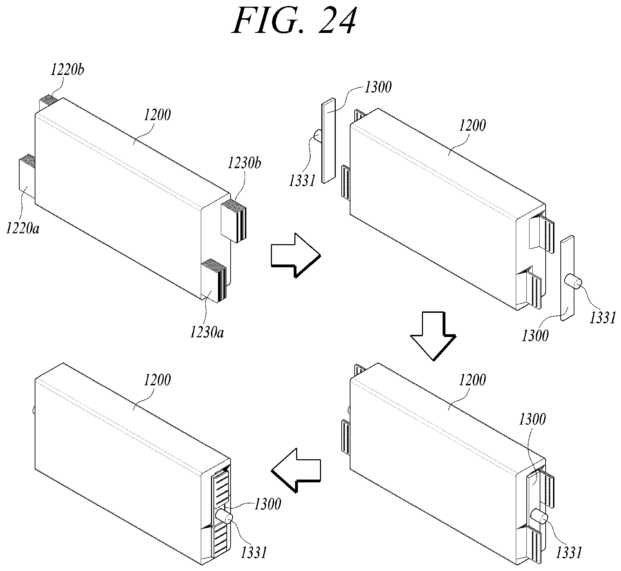

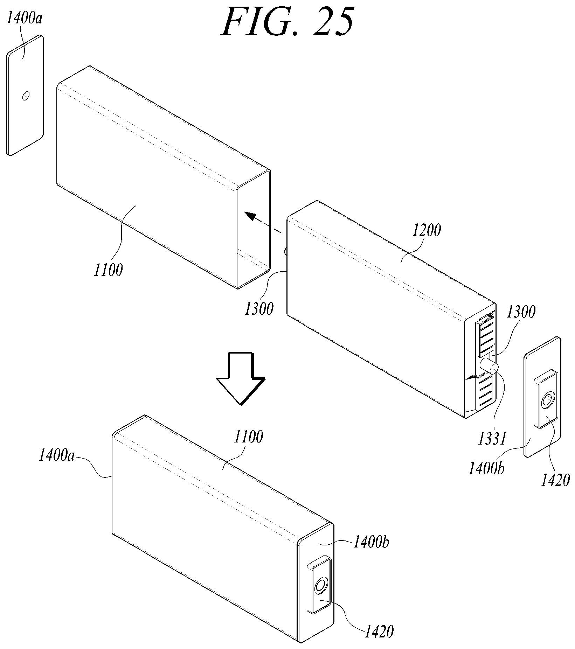

FIG. 24 is a diagram conceptually illustrating that foil tabs having different polarities are formed in both directions (e.g., on both side/opposite side) of the electrode assembly and two foil tabs having the same polarity are bonded to one current collection member in the secondary battery according to another embodiment of the present disclosure. FIG. 25 is a diagram conceptually illustrating a process of the cap assembly being combined with the current collection member in the secondary battery according to another embodiment of the present disclosure. The process(es) of FIGS. 24 and/or 25 may for example be used for assembling a secondary battery according to the present disclosure such as the secondary battery 1000 described above.

As illustrated in FIGS. 24 and 25, the electrode assembly 1200 of the secondary battery according to an embodiment of the present disclosure includes the plurality of (1-1)-th foil tabs 1220a, the plurality of (1-2)-th foil tabs 1220b, the plurality of (2-1)-th foil tabs 1230a, and the plurality of (2-2)-th foil tabs 1230b. In the present embodiment, a detailed description of the same contents as those described with reference to FIGS. 22 and 23 is omitted.

The (1-1)-th foil tabs 1220a and the (1-2)-th foil tabs 1220b are disposed on one side of the electrode assembly 1200. The (2-1)-th foil tabs 1230a and the (2-2)-th foil tabs 1230b are disposed on the other (e.g., opposite) side of the electrode assembly 1200. The current collection member 1300 may be disposed between the (1-1)-th foil tabs 1220a and the (1-2)-th foil tabs 1220b and between the (2-1)-th foil tabs 1230a and the (2-2)-th foil tabs 1230b. When each of the plurality of foil tabs 1220a to 1230b is bent upward from the current collection plate 1310, the plurality of foil tabs 1220a to 1230b and the current collection plate 1310 may be bonded, e.g., by welding the plurality of foil tabs 1220a to 1230b and the current collection plate 1310 together over the plurality of foil tabs 1220a to 1230b.

When the plurality of foil tabs 1220a to 1230b and the current collection member 1300 are bonded, the electrode assembly 1200 may be accommodated in the case 1100. Openings may be formed in one surface and the other surface of the case 1100, respectively. The current collection protrusion 1310 may be exposed to the outside through the opening. The cap assembly 1400 may be combined with the case 1100 (e.g., so as to cover the opening). The current collection protrusion 1310 of the current collection plate 1300 may be inserted into the hollow of the rivet part of the cap assembly 1400.

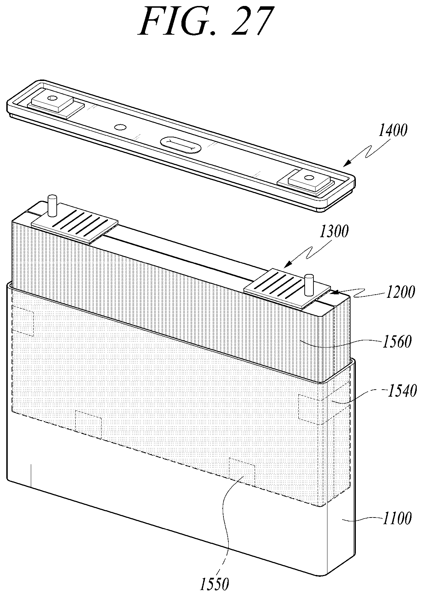

FIG. 26 is a diagram illustrating a secondary battery including two electrode portions according to another embodiment of the present disclosure. FIG. 27 is a diagram illustrating that foil tabs formed in the two electrode portions are bonded to an electrode member according to another embodiment of the present disclosure.

As illustrated in FIGS. 26 and 27, the secondary battery 1000 according to another embodiment of the present disclosure includes the case 1100, the electrode assembly 1200, the current collection member 1300, and the cap assembly 1400. In the present embodiment, a detailed description of the same contents as those described with reference to FIGS. 1 to 25 is omitted (e.g., unless mentioned otherwise, the components of the secondary battery 1000 may be embodied as described above with reference to FIGS. 1 to 25).

The electrode portion 1210 of the electrode assembly 1200 includes a first electrode portion 1210a and a second electrode portion 1210b. A first foil tab 1220-1 and a second foil tab 1230-1 are formed in the first electrode portion 1210a. A first foil tab 1220-2 and a second foil tab 1230-2 are formed in the second electrode portion 1210b. The first foil tab 1220-1 of the first electrode portion 1210a and the first foil tab 1220-2 of the second electrode portion 1210b are bonded to one same current collection member 1300a. The second foil tab 1230-1 of the first electrode portion 1210a and the second foil tab 1230-2 of the second electrode portion 1210b are bonded to one same current collection member 1300b.

In the present embodiment, the first electrode portion 1210a and the second electrode portion 1210b may be combined by being taped by a fourth insulating tape 1540 and a fifth insulating tape 1550. The fourth insulating tape 1540 may be attached to the side of the electrode assembly 1200 in the height direction thereof. The fifth insulating tape 1550 may be attached to the side of the electrode assembly 1200 in the length direction thereof.

When N fourth and fifth insulating tapes 1540 and 1550 are attached to one surface of the electrode assembly 1200, each of the fourth and fifth insulating tapes 1540 and 1550 may be attached to a point by which the length of the surface to which the fourth and fifth insulating tapes 1540 and 1550 are attached is divided by (n+1). For example, as illustrated in FIG. 26, when one fourth insulating tape 1540 is attached to one side of the electrode assembly 1200 in the height direction thereof, the fourth insulating tape 1540 is attached to a point by which the side of the electrode assembly 1200 in the height direction is divided into two. When two fifth insulating tapes 1550 are attached to one side of the electrode assembly 1200 in the length direction thereof, the fifth insulating tape 1550 is attached to two points by which the side of the electrode assembly 1200 in the length direction are divided into three. In the present embodiment, the number of fourth insulating tapes 1540 has been illustrated as being one and the number of fifth insulating tapes 1550 has been illustrated as being two, but the present disclosure is not limited thereto. The fourth insulating tape 1540 and the fifth insulating tape 1550 can function to bind the first electrode portion 1210a and the second electrode portion 1210b and to also insulate the first electrode portion 1210a and the second electrode portion 1210b.

After the electrode assembly 1200 is taped by the fourth and fifth insulating tapes 1540 and 1550, a sixth insulating tape may be attached to the electrode assembly 1200 so that the sixth insulating tape surrounds all of the remaining surfaces of the electrode assembly 1200 except a side on which the foil taps 1220-1, 1220-2, 1230-1, and 1230-2 are formed for insulation between the electrode assembly 1200 and the case 1100. Thereafter, the electrode assembly 1200 may be inserted into the case 1100. The cap assembly 1400 may be combined with the opening of the case 1100 (e.g., so as to cover the opening).

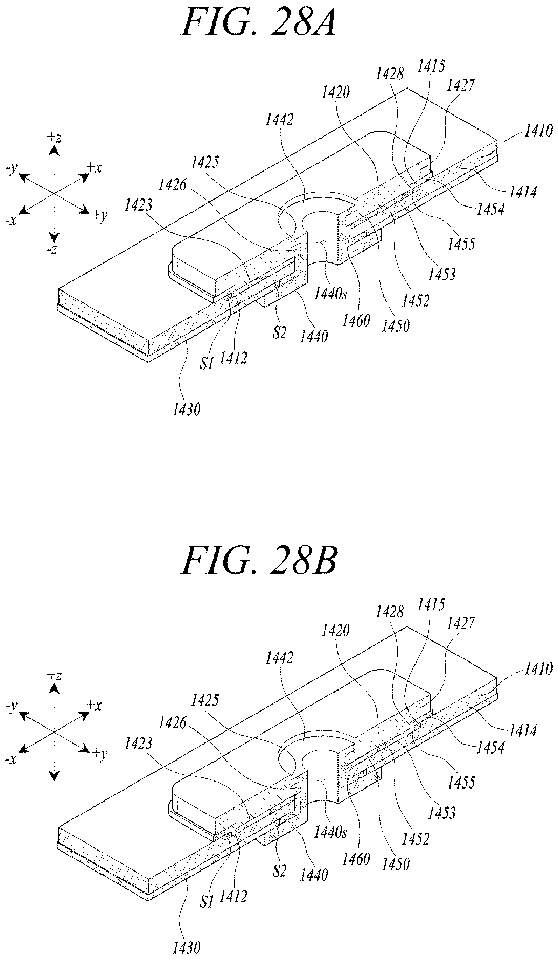

FIGS. 28A, 29A and 30A depict a cap assembly according to an embodiment of the present disclosure, which is similar to the embodiment of FIG. 10 described above.

FIGS. 28B, 29B and 30B depict a cap assembly according to an embodiment of the present disclosure, which is similar to the embodiment of FIGS. 11 and 12 described above.

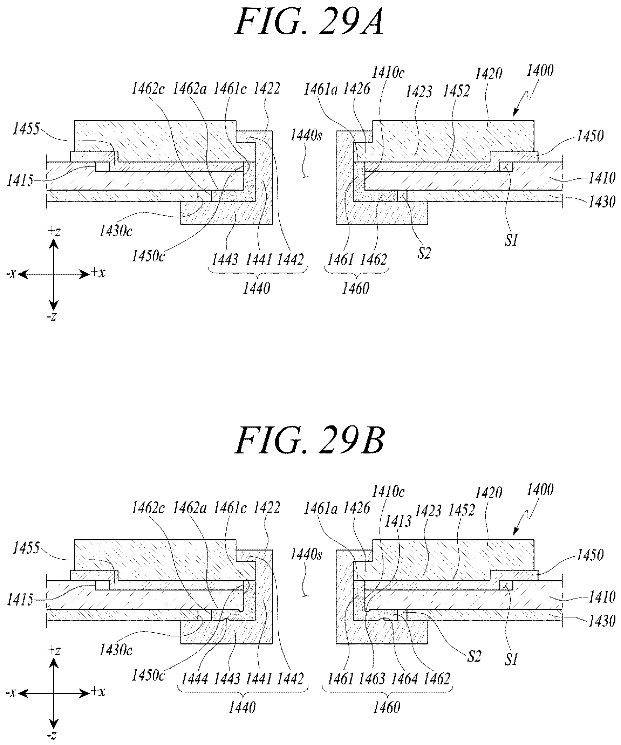

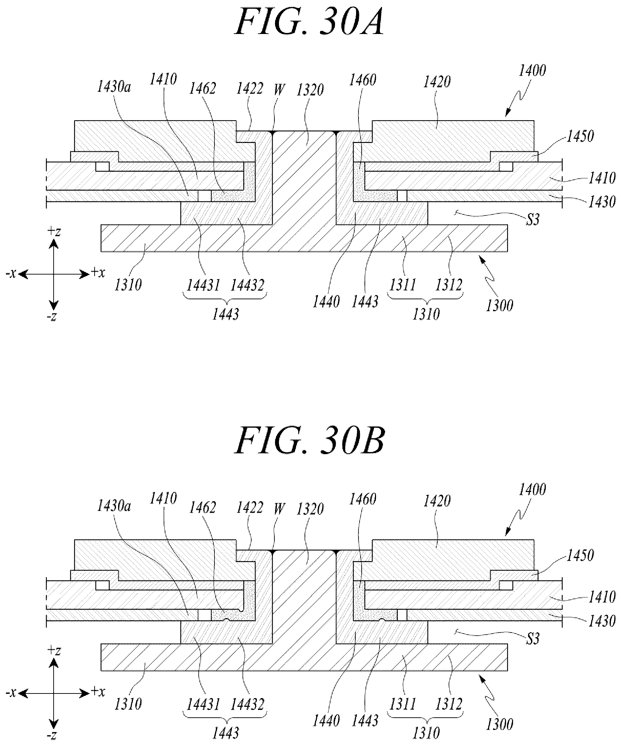

FIG. 28A is a perspective view illustrating a cross section of a structure in which the cap plate 1410, the electrode terminal 1420, the base insulating member 1430, the rivet part 1440 (as an example of a fastening member), the terminal insulating member 1450, and a gasket 1460 have been assembled according to an embodiment of the present disclosure. FIG. 29A is a front view of the structure of FIG. 28A, which is viewed from one side thereof. FIG. 30A is a diagram illustrating the state in which the current collection member 1300 has been combined with the structure of FIG. 29A.

FIG. 28B is a perspective view illustrating a cross section of a structure in which the cap plate 1410, the electrode terminal 1420, the base insulating member 1430, the rivet part 1440 (as an example of a fastening member), the terminal insulating member 1450, and the gasket 1460 have been assembled according to another embodiment of the present disclosure. FIG. 29B is a front view of the structure of FIG. 28B, which is viewed from one side thereof. FIG. 30B is a diagram illustrating the state in which the current collection member 1300 has been combined with the structure of FIG. 29B.

A first direction (i.e., a +Z or -Z direction) may be defined in FIGS. 28A-30B. The first direction (i.e., the +Z or -Z direction) may denote the "height direction of the secondary battery 1000" (e.g., the vertical direction as defined above). The first direction (i.e., the +Z or -Z direction) may be a direction toward the outside of the secondary battery 1000. The first direction (i.e., +Z or -Z direction) may be a direction into which a fastening member/rivet part 1440 is inserted into a through hole 1411 (e.g., the longitudinal direction of the fastening member/rivet part as defined above). A second direction (i.e., a +X, +Y, -X, or -Y direction) may be defined in FIGS. 28A-30B. The second direction (i.e., the +X, +Y, -X, or -Y direction) may be a direction perpendicular to the first direction (i.e., the +Z or -Z direction), e.g., a horizontal and/or radial direction as defined above.

The cap plate 1410, the electrode terminal 1420, the base insulating member 1430, and the terminal insulating member 1450 may be stacked together. For example, the base insulating member 1430, the cap plate 1410, the terminal insulating member 1450, and the electrode terminal 1420 may be sequentially stacked in the first direction (e.g., the +Z direction).

The terminal insulating member 1450 may be stacked in the first direction (e.g., the +Z direction) of the cap plate 1410. The insulating protrusion part 1453 of the terminal insulating member 1450 may be seated in the plate recess 1412 of the cap plate 1410. The plate step portion 1415 may face the insulating step portion 1455. The plate step portion 1415 and the insulating step portion 1455 may be aligned in the second direction (e.g., the +X direction). For example, the plate step portion 1415 and the insulating step portion 1455 may have the same length in the first direction (e.g., the +Z direction), and may be placed at the same height in the first direction (e.g., the +Z direction). The plate step portion 1415 and the insulating step portion 1455 may be spaced apart from each other in the second direction (i.e., the +X direction). A space S1 may be formed between the plate step portion 1415 and the insulating step portion 1455. The cap assembly 1400 according to an embodiment of the present disclosure may facilitate the assembly of the cap plate 1410 and the terminal insulating member 1450 due to the aforementioned structure. For example, as the space S1 is formed between the cap plate 1410 and the terminal insulating member 1450, a force that is necessary for the assembly of the cap plate 1410 and the terminal insulating member 1450 can be reduced because friction between the cap plate 1410 and the terminal insulating member 1450 is reduced. Furthermore, the cap assembly 1400 according to an embodiment of the present disclosure can reduce the thickness of the cap assembly 1400 due to the aforementioned structure. For example, as the insulating protrusion part 1453 is seated in the plate recess 1412 and the plate step portion 1415 and the insulating step portion 1455 are placed at the same height, the relative location of the terminal insulating member 1450 to the cap assembly 1410 can be fixed and a thickness that is occupied by the cap assembly 1410 and the terminal insulating member 1450 can also be reduced.

The electrode terminal 1420 may be stacked in the first direction (e.g., the +Z direction) of the terminal insulating member 1450. The terminal protrusion part 1423 of the electrode terminal 1420 may be seated in the insulating member recess 1452 of the terminal insulating member 1450. The insulating step portion 1455 may face the terminal step portion 1428. The insulating step portion 1455 and the terminal step portion 1428 may be aligned in the second direction (e.g., the +X direction). For example, the insulating step portion 1455 and the terminal step portion 1428 may have the same length in the first direction (e.g., the +Z direction), and may be placed at the same height in the first direction (e.g., the +Z direction). The terminal edge 1427 of the electrode terminal 1420 may be seated in the insulating body 1454 of the terminal insulating member 1450. The insulating body 1454 may be disposed between the terminal edge 1427 and the plate body 1414, and may be pressurized by the terminal edge 1427 and the plate body 1414. The cap assembly 1400 according to an embodiment of the present disclosure can reduce the thickness of the cap assembly 1400 due to the aforementioned structure. For example, as the terminal protrusion part 1423 is seated in the insulating member recess 1452 and the insulating step portion 1455 and the terminal step portion 1428 are placed at the same height, the relative location of the electrode terminal 1420 to the terminal insulating member 1450 can be fixed and a thickness that is occupied by the terminal insulating member 1450 and the electrode terminal 1420 can also be reduced. The cap assembly 1400 according to an embodiment of the present disclosure can prevent an electrical short due to the aforementioned structure. For example, as the terminal protrusion part 1423 is seated in the insulating member recess 1452 and the insulating step portion 1455 supports the terminal step portion 1428 toward the inside in the radius direction thereof, an electrical short can be prevented because the location of the electrode terminal 1420 is fixed. Furthermore, as the insulating body 1454 is pressurized between the terminal edge 1427 and the plate body 1414, an electrical short can be prevented because the location of the terminal insulating member 1450 is fixed.

The cap assembly 1400 may include the gasket 1460. The gasket 1460 may be disposed between the cap plate 1410 and the rivet part 1440. The gasket 1460 prevents an electrolyte or gas within a case (e.g., the case 1100 in FIG. 2) from leaking to the outside of the case 1100, and prevents moisture or air from penetrating from the outside of the case 1100 to the inside of the case 1100.

The gasket 1460 may include a first sealing portion 1461 and a second sealing portion 1462. The second sealing portion 1462 may be named any one of an "extension portion", a "sealing portion", or a "gasket support portion". The first sealing portion 1461 may have a hollow structure, and may be inserted into the through hole 1411 and disposed between the cap plate 1410 and the body part 1441 of the rivet part 1440. The hollow of the first sealing portion 1461 may have the same central axis as the through hole 1411 and the hollow 1440s of the body part 1441. The first sealing portion 1461 may have a cylindrical shape having a height in the first direction (e.g., the +Z direction). The first sealing portion 1461 may be placed outside the body part 1441 in the radius direction thereof. The first sealing portion 1461 may be disposed between the cap plate 1410 and the body part 1441. The first sealing portion 1461 may be disposed between the insulating protrusion part 1453 and the body part 1441.

The second sealing portion 1462 may have a form of a flat plate that is bent to the outside of the first sealing portion 1461 in the radius direction thereof. The second sealing portion 1462 may be disposed between the cap plate 1410 and the inner fastening portion 1443. The second sealing portion 1462 may be placed closer to the inner fastening portion 1443 than to the outer fastening portion 1442. The second sealing portion 1462 may be formed in an end portion of the first sealing portion 1461 toward an electrode assembly (e.g., the electrode assembly 1200 in FIG. 2).

The second sealing portion 1462 may be disposed between the cap plate 1410 and the inner fastening portion 1443. The second sealing portion 1462 may be pressurized by the cap plate 1410 and the inner fastening portion 1443.

The second sealing portion 1462 may be aligned with the base insulating member 1430 in the second direction (e.g., the +X direction). For example, the second sealing portion 1462 and the base insulating member 1430 may have the same length in the first direction (e.g., the +Z direction), and may be placed at the same height in the first direction (e.g., the +Z direction). The second sealing portion 1462 may include a second sealing portion side 1462c. The base insulating member 1430 may include a base side 1430c. The second sealing portion side 1462c and the base side 1430c may be spaced apart from each other. The second sealing portion side 1462c and the base side 1430c may face each other in the second direction (i.e., the +X direction). A space S2 may be formed between the second sealing portion side 1462c and the base side 1430c. The cap assembly 1400 according to an embodiment of the present disclosure can facilitate the assembly of the gasket 1460 and the base insulating member 1430 due to the aforementioned structure. For example, as the space S2 is formed between the gasket 1460 and the base insulating member 1430, a force that is necessary for the assembly of the gasket 1460 can be reduced between friction between the gasket 1460 and the base insulating member 1430 is reduced. Furthermore, the locations of the second sealing portion 1462 and the base insulating member 1430 can be firmly fixed because the second sealing portion 1462 and the base insulating member 1430 are pressurized by the inner fastening portion 1443 in the first direction (the +Z direction) in the state in which the second sealing portion 1462 and the base insulating member 1430 have been placed at the same height. Furthermore, the cap assembly 1400 according to an embodiment of the present disclosure can reduce the thickness of the cap assembly 1400 due to the aforementioned structure. For example, the second sealing portion 1462 and the base insulating member 1430 can be aligned at the same height and a thickness that is occupied by the gasket 1460 and the base insulating member 1430 can be reduced through only the process of placing the second sealing portion 1462 and the base insulating member 1430 at the same height and pressurizing the second sealing portion 1462 and the base insulating member 1430 by the inner fastening portion 1443.

The first sealing portion 1461 of the gasket 1460 may be disposed between the body part 1441 and the cap plate 1410. The first sealing portion 1461 may be pressurized by the body part 1441, and may come into contact with the cap plate 1410. The first sealing portion 1461 may include a first sealing portion side 1461c that comes into contact with a side 1410c of the cap plate 1410.

The first sealing portion 1461 of the gasket 1460 may be disposed between the body part 1441 and the terminal insulating member 1450. The first sealing portion 1461 may be pressurized by the body part 1441, and may come into contact with the terminal insulating member 1450. The first sealing portion 1461 may include a first sealing portion side 1461c that comes into contact with a side 1450c of the terminal insulating member 1450.

The first sealing portion 1461 of the gasket 1460 may come into contact with the second circumference wall 1426 of the electrode terminal 1420. The first sealing portion 1461 may include a first sealing portion top 1461a that comes into contact with the second circumference wall 1426. The second circumference wall 1426 may have a structure in which the second circumference wall 1426 has been exposed to a through hole (e.g., the through hole 1411 in FIG. 5) of the cap plate 1410, and thus may be a portion that is vulnerable to the penetration of moisture. The cap assembly 1400 according to an embodiment of the present disclosure can improve sealing performance in an area near the second circumference wall 1426 because the first sealing portion 1461 is pressurized toward the second circumference wall 1426 in the first direction (e.g., the +Z direction) by the inner fastening portion 1443 of the rivet part 1440.

The second sealing portion 1462 of the gasket 1460 may come into contact with the cap assembly 1410. The second sealing portion 1462 may be vulnerable to the penetration of moisture because the space S2 may be formed between the second sealing portion 1462 and the base insulating member 1430. The cap assembly 1400 according to an embodiment of the present disclosure can improve sealing performance in an area near the space S2 because the second sealing portion 1462 is pressurized toward the cap plate 1410 in the first direction (e.g., the +Z direction) by the inner fastening portion 1443 of the rivet part 1440.

The gasket 1460 may include a material that is deformed by heat. For example, the gasket 1460 may include a rubber material. The secondary battery 1000 according to an embodiment of the present disclosure can prevent damage to the gasket 1460 attributable to friction between the gasket 1460 and the base insulating member 1430 because the space S2 is formed between the gasket 1460 and the base insulating member 1430 and contact between the gasket 1460 and the base insulating member 1430 is suppressed although the gasket 1460 is expanded by the heat.

The current collection member 1300 may be inserted into the hollow 1440s of the rivet part 1440 and combined with the cap assembly 1400. The current collection protrusion 1320 may be inserted into the hollow 1440s. The current collection plate 1310 may pressurize the inner fastening portion 1443 of the rivet part 1440.

The current collection plate 1310 may include a first current collection portion 1311 that comes into contact with the inner fastening portion 1443 and a second current collection portion 1312 that extends from the first current collection portion 1311. The first current collection portion 1311 may pressurize the inner fastening portion 1443 toward the second sealing portion 1462 of the gasket 1460. The first current collection portion 1311 may pressurize the inner fastening portion 1443 toward the base insulating member 1430. The second current collection portion 1312 may be spaced apart from the base insulating member 1430. A space S3 may be formed between the second current collection portion 1312 and the base insulating member 1430. In the secondary battery 1000 according to an embodiment of the present disclosure, sealing performance of the cap assembly 1400 can be improved because the current collection protrusion 1320 is inserted into the hollow 1440s, the current collection member 1300 is assembled with the cap assembly 1400, and the current collection plate 1310 also pressurizes the inner fastening portion 1443 in the first direction (e.g., the +Z direction). For example, the inner fastening portion 1443 may include a first pressurization portion 14431 that comes into contact with an end portion 1430a of the base insulating member 1430 and a second pressurization portion 14432 that comes into contact with the second sealing portion 1462 of the gasket 1460. As the current collection protrusion 1432 is inserted into the hollow 1440s, the first and second pressurization portions 14431 and 14432 may be pushed out in the first direction (i.e., the +Z direction) along with the current collection plate 1310. Accordingly, sealing performance in an area near the gasket 1460 can be improved because the base insulating member 1430 is pressurized between the cap plate 1410 and the first pressurization portion 14431 and the second sealing portion 1462 is pressurized between the cap plate 1410 and the second pressurization portion 14432.

The inner fastening portion 1443 of the rivet part 1440 is extended until the inner fastening portion 1443 comes into contact with the base insulating member 1430 through the second sealing portion 1462 of the gasket 1460. In this case, airtightness is maintained because the inner fastening portion 1443 becomes close to the base insulating member 1430 and the second sealing portion 1462 only when the thickness of the second sealing portion 1462 in the first direction (e.g., the +Z direction) is the same as the thickness of the base insulating member 1430 in the first direction (e.g., the +Z direction).

The radius of the insertion hole 1421 may be smaller than the radius of the through hole 1411. Accordingly, the bottom of the electrode terminal 1420 may be exposed by the through hole 1411 around the insertion hole 1421. The top 1461a of the first sealing portion 1461 of the gasket 1460 may come into contact with the second circumference wall 1426 that is exposed by the through hole 1411 of the electrode terminal 1420. Accordingly, the sealing effect of the gasket 1460 is increased.

The gasket 1460 may include a groove 1463 that is formed at a bent portion at which the first sealing portion 1461 and the second sealing portion 1462 come into contact with each other. The groove 1463 may be continuously formed along the circumference of the first sealing portion 1461. The cap plate 1410 may include a hole protrusion part 1413 that is formed at the bottom of the through hole 1411. The hole protrusion part 1413 may be inserted into the groove 1463. The hole protrusion part 1413 may be formed to have a shape corresponding to a shape of the groove 1463. When the hole protrusion part 1413 is inserted into the groove 1463, the gasket 1460 and the cap plate 1410 are closely combined, thus improving sealing power of the gasket 1460.

The inner fastening portion 1443 of the rivet part 1440 may include a rivet protrusion 1444 that is formed in a direction toward the cap plate 1410. The number of rivet protrusions 1444 may be plural. A fastening groove 1464 may be formed in the gasket 1460 in accordance with the rivet protrusion 1444. The rivet protrusion 1444 may be inserted into the fastening groove 1464. In another embodiment, the fastening groove 1464 may be formed in at least any one of the base insulating member 1430 or the gasket 1460. The number of fastening grooves 1464 may be the same as the number of rivet protrusions 1444. The rivet part 1440 can be stably fixed trough the combination of the rivet protrusion 1440 and the fastening groove 1464.

The current collection member 1300 may be combined with the cap assembly 1400. The combination of the assembly 1400 and the current collection member 1300 may be performed as the current collection protrusion 1320 is inserted into the hollow 1440s formed in the body part 1441 of the rivet part 1440. To this end, the external diameter of the current collection protrusion 1320 may be identical with or finely greater than the internal diameter of the hollow 1440s of the body part 1441. When the cap assembly 1400 and the current collection member 1300 are combined, the current collection plate 1310 may come into contact with the inner fastening portion 1443 of the rivet part 1440.

After the cap assembly 1400 and the current collection member 1300 are combined, the current collection protrusion 1320 and the outer fastening portion 1442 of the rivet part 1440 may be welded together. More specifically, the current collection protrusion 1320 and the outer fastening portion 1442 may be welded together along the outer circumference of the top of the current collection protrusion 1320 by a method, such as ultrasonic welding or laser welding. For clean and continuous welding, the outer circumference of the current collection protrusion 1320 and the inside of the outer fastening portion 1442 may be subjected to round processing or deodorization treatment.

When the current collection protrusion 1320 is inserted into the hollow 1440s formed in the body part 1441 of the rivet part 1440, the top of the current collection protrusion 1320 may be placed at the same height as the outer fastening portion 1442 of the rivet part 1440. The outer fastening portion 1442 may be spaced apart from the top of the electrode terminal 1420. The top of the current collection protrusion 1320 may be spaced apart from the top of the electrode terminal 1420. Accordingly, a welded welding part W does not come up to the outside of the electrode terminal 1420.

The current collection plate 1310 of the current collection member 1300 may be bonded to an electrode/foil tab (e.g., the foil tabs 1220 and 1230 in FIG. 3) of an electrode assembly (e.g., the electrode assembly 1200 in FIG. 2). The current collection protrusion 1320 that is formed by protruding from one surface of the current collection plate 1310 is connected to the electrode terminal 1420 through the rivet part 1440. Accordingly, the electrode assembly 1200 is electrically connected to the electrode terminal 1420.

Although the embodiments of the present disclosure have been described above, a person who has ordinary knowledge in the art may variously modify and change the present disclosure by supplementing, changing, deleting, or adding a component without departing from the spirit of the present disclosure written in the claims. All of such embodiments may be said to belong to the scope of rights of the present disclosure.

In view of the above, it will be appreciated that the present invention also provides the following itemized embodiments. Any of these embodiments may additionally comprise any feature or combination of features of the secondary battery, of the cap assembly and/or of the battery part as described herein.
Embodiment 1. A secondary battery comprising:
   a case in which an opening is formed;
   an electrode assembly comprising an electrode part accommodated in the case and a plurality of foil tabs formed at one end of the electrode part;
   a current collection member comprising a current collection plate electrically connected to the plurality of foil tabs and a current collection protrusion that protrudes from the current collection plate; and
   a cap assembly combined with the opening of the case,
   wherein the cap assembly comprises:
      a cap plate in which a through hole is formed,
      an electrode terminal in which an insertion hole is formed and is seated so that the through hole and the insertion hole correspond to each other over the cap plate,
      a base insulating member disposed between the cap plate and the electrode assembly, and
      a rivet part comprising a body part that has a hollow structure into which the current collection protrusion is inserted and that is inserted into the through hole and the insertion hole, a first bent part bent toward the electrode terminal on one side of the body part, and a second bent part bent toward the base insulating member on the other side of the body part.
Embodiment 2. The secondary battery of embodiment 1, wherein the cap assembly further comprises a terminal insulating member disposed between the electrode terminal and the cap plate.
Embodiment 3. The secondary battery of embodiment 1 or 2, wherein the cap assembly further comprises a gasket disposed between the cap plate and the rivet part.
Embodiment 4. The secondary battery of any one of embodiments 1 to 3, wherein the first bent part and second bent part of the rivet part are pressurized in a direction of the cap plate.
Embodiment 5. The secondary battery of any one of embodiments 1 to 4, wherein the second bent part is vertically thicker than the first bent part.
Embodiment 6. The secondary battery of any one of embodiments 1 to 5, wherein a maximum length of the second bent part in a horizontal direction is greater than a maximum length of the first bent part in a horizontal direction.
Embodiment 7. The secondary battery of any one of embodiments 1 to 6, wherein a seated groove in which the first bent part of the rivet part is seated is formed in a circumference of the insertion hole of the electrode terminal.
Embodiment 8. The secondary battery of any one of embodiments 1 to 7, wherein the first bent part of the rivet part is seated so that the first bent part of the rivet part has a lower height than a top of the electrode terminal.
Embodiment 9. The secondary battery of any one of embodiments 2 to 8, wherein:
   an accommodation groove is formed in a circumference of the through hole on a top surface of the cap plate,
   an insulating protrusion part that protrudes in a direction of the cap plate is formed in the terminal insulating member, and
   the insulating protrusion part is accommodated in the accommodation groove.
Embodiment 10. The secondary battery of embodiment 9, wherein a space isolated in a horizontal direction is formed between the cap plate and the insulating protrusion part.
Embodiment 11. The secondary battery of any one of embodiments 2 to 10, wherein:
   a terminal groove is formed on a top surface of the terminal insulating member,
   a terminal protrusion part that protrudes in a direction of the terminal insulating member is formed in the electrode terminal, and
   the terminal protrusion part is accommodated in the terminal groove.
Embodiment 12. The secondary battery of any one of embodiments 3 to 11, wherein the gasket comprises:
   an insertion part inserted into the through hole, and
   a support part bent at one end of the insertion part and disposed under the cap plate.
Embodiment 13. The secondary battery of any one of embodiments 3 to 12, wherein:
   the insertion hole has a smaller radius than the through hole, and
   a top of the insertion part of the gasket comes into contact with a bottom of the electrode terminal.
Embodiment 14. The secondary battery of embodiment 12 or 13, wherein the support part of the gasket has a thickness vertically identical with a thickness of the base insulating member.
Embodiment 15. The secondary battery of any one of embodiments 3 to 14, wherein the second bent part of the rivet part extends up to the base insulating member after passing through the gasket.
Embodiment 16. The secondary battery of any one of embodiments 1 to 15, wherein:
   at least one rivet protrusion is formed in the second bent part of the rivet part in a direction toward the cap plate, and
   a fastening groove into which the rivet protrusion is inserted is formed in at least one of the base insulating member or the gasket.
Embodiment 17. The secondary battery of any one of embodiments 11 to 16, wherein:
   a groove is formed in a portion of the gasket in which the insertion part and the support part come into contact with each other, and
   a hole protrusion part inserted into the groove of the gasket is formed at a bottom of the through hole of the cap plate.
Embodiment 18. The secondary battery of any one of embodiments 12 to 17, wherein the support part of the gasket and the base insulating member are disposed to be spaced apart from each other in a horizontal direction.
Embodiment 19. The secondary battery of any one of embodiments 1 to 18, wherein:
   the insertion hole has a smaller radius than the through hole, and
   the first bent part of the rivet part extends more outward than the through hole.

In view of the above, it will be appreciated that the present invention further provides the following itemized embodiments (referred to and numbered as examples below). Any of these embodiments may additionally comprise any feature or combination of features of the secondary battery, of the cap assembly and/or of the battery part as described herein. In particular, the rivet part may also be embodied as a fastening member, for example as described above.
Example 1. A secondary battery comprising:
   an electrode assembly;
   a case configured to accommodate the electrode assembly and comprising an opening; and
   a cap assembly combined with the case and configured to cover the opening,
   wherein the cap assembly comprises:
      a cap plate comprising a through hole;
      a rivet part comprising a body part inserted into the through hole and extended toward an outside of the case and an inner fastening portion extended between the cap plate and the electrode assembly from the body part;
      a base insulating member disposed between the cap plate and the electrode assembly; and
      a gasket disposed between the cap plate and the rivet part, and
      at least a part of the base insulating member and at least a part of the gasket are aligned between the cap plate and the inner fastening portion and come into contact with the inner fastening portion.
Example 2. The secondary battery of example 1, wherein:
   the cap plate, the inner fastening portion of the rivet part, the base insulating member, and the gasket are stacked to each form a layer of the cap assembly, and
   the at least a part of the base insulating member and the at least a part of the gasket are disposed within an identical layer of the cap assembly.
Example 3. The secondary battery of example 2, wherein the at least a part of the base insulating member and the at least a part of the gasket have an identical thickness.
Example 4. The secondary battery of any one of examples 1 to 3, wherein the inner fastening portion comprises:
   a first pressurization portion configured to come into contact with the base insulating member; and
   a second pressurization portion configured to come into contact with the gasket.
Example 5. The secondary battery of any one of examples 1 to 4, wherein:
   the base insulating member and the gasket are disposed within an identical layer of the cap assembly and spaced apart from each other, and
   the cap assembly comprises a space formed between the base insulating member and the gasket.
Example 6. The secondary battery of any one of examples 1 to 5, wherein the gasket comprises:
   a first sealing portion disposed between the body part and the cap plate; and
   a second sealing portion extended from the first sealing portion and aligned with the base insulating member.
Example 7. The secondary battery of any one of examples 1 to 6, further comprising an electrode terminal spaced apart from the cap plate,
   wherein the inner fastening portion comprises:
   an outer fastening portion bent from the body part and connected to the electrode terminal; and
   an inner fastening portion bent from the body part between the gasket and the electrode assembly and configured to come into contact with the gasket.
Example 8. The secondary battery of any one of examples 1 to 7, further comprising:
   a current collection plate, and
   a current collection protrusion configured to protrude from the current collection plate and inserted into a hollow formed in the body part,
   wherein the inner fastening portion is disposed between the gasket and the current collection plate.
Example 9. The secondary battery of any one of examples 1 to 8, wherein:
   the rivet part comprises a rivet protrusion configured to protrude toward the gasket, and
   the gasket comprises a fastening groove in which the rivet protrusion is accommodated.
Example 10. The secondary battery of any one of examples 1 to 9, wherein:
   the cap plate comprises a hole protrusion part configured to protrude toward the gasket, and
   the gasket comprises a groove in which the hole protrusion part is accommodated.
Example 11. A secondary battery comprising:
   an electrode assembly comprising a foil tab;
   a case configured to accommodate the electrode assembly and comprising an opening;
   a cap assembly combined with the case and configured to cover the opening; and
   a current collection member configured to connect the foil tab and the cap assembly,
   wherein the cap assembly comprises:
      a cap plate comprising a through hole;
      a rivet part comprising a body part inserted into the through hole and extended toward an outside of the case and a hollow formed in the body part; and
      a gasket comprising a first sealing portion disposed between the rivet part and the cap plate and a second sealing portion disposed between the current collection member and the cap plate, and
      the current collection member comprises:
         a current collection protrusion inserted into the hollow; and
         a current collection plate extended from the current collection protrusion, disposed to overlap the second sealing portion, and configured to pressurize the second sealing portion toward the cap plate.
Example 12. The secondary battery of example 11, wherein the rivet part comprises an inner fastening portion disposed between the current collection plate and the second sealing portion and configured to come into contact with the second sealing portion.
Example 13. The secondary battery of example 12, wherein the current collection plate comprises:
   a first current collection portion configured to overlap the second sealing portion and the inner fastening portion; and
   a second current collection portion extended from the first current collection portion and configured to not overlap the second sealing portion.
Example 14. The secondary battery of any one of examples 11 to 13, wherein:
   the first sealing portion is disposed between the cap plate and the current collection protrusion, and
   the current collection protrusion is configured to pressurize the first sealing portion toward the cap plate.
Example 15. The secondary battery of any one of examples 11 to 14, further comprising a base insulating member disposed between the current collection plate and the cap plate,
   wherein the current collection plate is configured to pressurize the base insulating member toward the cap plate.
Example 16. A secondary battery comprising:
   an electrode assembly;
   a case configured to accommodate the electrode assembly and comprising an opening; and
   a cap assembly combined with the case and configured to cover the opening,
   wherein the cap assembly comprises:
      a cap plate comprising a plate body and a plate recess depressed and formed in the plate body;
      a terminal insulating member comprising an insulating body stacked along with the cap plate, an insulating member recess depressed and formed in the insulating body, and an insulating protrusion part seated in the plate recess; and
      an electrode terminal comprising a terminal edge stacked along with the terminal insulating member and a terminal protrusion part seated in the insulating member recess.
Example 17. The secondary battery of example 16, wherein:
   the cap plate comprises a plate step portion, and
   the terminal insulating member comprises an insulating step portion configured to face the plate step portion.
Example 18. The secondary battery of example 17, wherein:
   the plate step portion and the insulating step portion are spaced apart from each other, and
   the cap assembly comprises a space formed between the plate step portion and the insulating step portion.
Example 19. The secondary battery of any one of examples 16 to 18, wherein the electrode terminal comprises a terminal step portion configured to connect the terminal protrusion part and the terminal edge.
Example 20. The secondary battery of any one of examples 16 to 19, wherein the cap plate, the terminal insulating member, and the electrode terminal are stacked with respective step shapes.

## Claims

1. A secondary battery (1000) comprising:
a case (1100) in which an opening is formed;
an electrode assembly (1200) comprising an electrode portion (1210) accommodated in the case (1100) and a plurality of electrode tabs (1220, 1230) formed at one side of the electrode portion (1210);
a current collection member (1300) electrically connected to the plurality of electrode tabs (1220, 1230) and comprising a current collection protrusion (1320) that protrudes from the current collection member (1300); and
a cap assembly (1400) covering the opening of the case (1100),
wherein the cap assembly (1400) comprises:
a cap (1410) in which a through hole (1411) is formed,
an electrode terminal (1420) in which an insertion hole (1421) is formed, the electrode terminal (1420) being arranged so that the through hole (1411) and the insertion hole (1421) overlap each other, and
a fastening member (1440) comprising:
a hollow body portion (1441) into which the current collection protrusion (1320) is inserted and that extends from a first end through the insertion hole (1421) in the electrode terminal (1420) and then through the through hole (1411) in the cap (1410) to a second end,
a first projecting portion (1442) projecting laterally outward from the body portion (1441) at the first end of the body portion (1441), and
a second projecting portion (1443) projecting laterally outward from the body portion (1441) at the second end of the body portion (1441).

2. The secondary battery (1000) of claim 1, wherein:
the cap (1410) and the electrode terminal (1420) are pressed together by the first projecting portion (1442) and second projecting portion (1443) of the fastening member (1440); and/or
the fastening member (1440) is or comprises a rivet, in particular wherein the first projecting portion (1442) is a first bent portion of the rivet that is bent toward the electrode terminal (1420) and the second projecting portion (1443) is a second bent portion of the rivet that is bent toward the cap (1410).

3. The secondary battery (1000) of claim 1 or 2, wherein:
the second projecting portion (1443) is thicker in a direction from the first end to the second end of the body portion than the first projecting portion (1442); and/or
a maximum length by which the second projecting portion (1443) projects laterally outward from the body portion (1441) is greater than a maximum length by which the first projecting portion (1442) projects laterally outward from the body portion (1441).

4. The secondary battery (1000) of any one of the preceding claims, wherein the second projecting portion (1443) is divided into a plurality of segments projecting laterally outward from the body portion (1441).

5. The secondary battery (1000) of any one of the preceding claims, wherein a recess (1422) in which the first projecting portion (1442) of the fastening member (1440) is seated is formed in the electrode terminal (1420) along a circumference of the insertion hole (1421),
in particular wherein the first projecting portion (1442) of the fastening member (1440) is arranged such that a top of the first projecting portion (1442) of the fastening member (1440) facing away from the cap (1410) is flush with or recessed from a top of the electrode terminal (1420) facing away from the cap (1410).

6. The secondary battery (1000) of any one of the preceding claims, wherein the cap assembly (1400) further comprises a terminal insulating member (1450) disposed between the electrode terminal (1420) and the cap (1410),
in particular wherein:
an accommodation recess (1412) is formed along a circumference of the through hole (1411) in an outer surface of the cap facing away from the case (1100) and the terminal insulating member (1450) or a part thereof is arranged in the accommodation recess (1412), wherein optionally the terminal insulating member (1450) comprises an insulating protrusion (1453) that protrudes in a direction of the cap (1410) and is accommodated in the accommodation recess (1412).

7. The secondary battery (1000) of claim 6, wherein:
the terminal insulating member (1450), in particular the insulating protrusion (1453), is separated from a sidewall of the accommodation recess (1412) by a gap (S1); and/or
a terminal recess (1452) is formed in a top surface of the terminal insulating member (1450) facing away from the cap (1410) and the electrode terminal (1420) or a part thereof is arranged in the terminal recess (1452), in particular wherein the electrode terminal (1420) comprises a terminal protrusion (1423) that protrudes in a direction of the terminal insulating member (1450) and is accommodated in the terminal groove (1452).

8. The secondary battery (1000) of any one of the preceding claims, wherein:
the insertion hole (1421) has a smaller lateral dimension than the through hole (1411), and/or
the first projecting portion (1442) of the fastening member (1440) projects laterally outward from the body portion (1441) beyond an edge of the through hole (1411).

9. The secondary battery (1000) of any one of the preceding claims, wherein the cap assembly (1400) further comprises a base insulating member (1430) disposed between the cap (1410) and the electrode assembly (1200).

10. The secondary battery (1000) of any one of the preceding claims, wherein the cap assembly (1400) further comprises a gasket (1460) disposed between the cap (1410) and the fastening member (1440).

11. The secondary battery (1000) of claim 10, wherein the gasket (1460) comprises:
an insertion portion (1461) inserted into the through hole (1411), and
a support portion (1462) projecting laterally outward from the insertion portion (1461) and disposed between the cap (1410) and the second projecting portion (1443) of the fastening member (1440),
wherein optionally an end of the insertion portion (1461) of the gasket (1460) facing away from the support portion (1462) is in contact with the electrode terminal (1420), in particular a bottom of the electrode terminal (1420) facing towards the cap (1410).

12. The secondary battery (1000) of claim 9 and 11, wherein:
the support portion (1462) of the gasket (1460) has a thickness identical with a thickness of the base insulating member (1430); and/or
the second projecting portion (1443) of the fastening member (1440) extends along the support portion (1462) of the gasket (1460) up to and, optionally, onto the base insulating member (1430); and/or
the support portion (1462) of the gasket (1460) and the base insulating member (1430) are separated from each other by a gap.

13. The secondary battery (1000) of claim 11 or 12, wherein:
a groove (1463) is formed in a portion of the gasket (1460) in which the insertion portion (1461) and the support portion (1462) meet, and
the cap (1410) comprises a gasket protrusion (1413) inserted into the groove (1463) of the gasket (1460).

14. The secondary battery (1000) of any one of claims 9 to 13, wherein:
at least one fastening protrusion (1444) is formed in the second projecting portion (1443) of the fastening member (1440) protruding in a direction toward the cap (1410), and
a fastening groove (1464) into which the fastening protrusion (1444) is inserted is formed in at least one of the base insulating member (1430) or the gasket (1460).

15. The secondary battery of any one of the preceding claims, wherein the current collection member (1300) comprises a current collection base (1310), in particular a current collection plate, that is electrically connected to the plurality of electrode tabs (1220, 1230) and from which the current collection protrusion (1320) protrudes, in particular wherein the current collection base (1310) comprises a fixing structure (1330, 1340) that engages a corresponding counterpart on the second projecting portion (1443) for fixing the current collection member (1300) and the fastening member (1440) relative to each other.
